# EUROPEAN PATENT APPLICATION

(11) **EP 3 399 184 A1**
(43) Date of publication of application: **07.11.2018**
(21) Application number: 18000134.9
(22) Date of filing: 13.02.2018
(51) Int. Cl.: F03D 9/00, B60F 3/00, B64C 11/00, B63H 13/00, B64C 39/00, F03B 17/06, F03D 3/02, F03D 3/06, B63H 1/08

(54) **NON-POSITIVE-DISPLACEMENT FLUID MACHINE**

(30) Priority: 15.02.2017 CZ 20170087
(71) Applicant: Pejsa, Ladislav, 160 00 Praha 6 (CZ)
(72) Inventor: Pejsa, Ladislav, 160 00 Praha 6 (CZ)
(74) Representative: Smrckova, Marie

(57) **Abstract**

The non-positive-displacement fluid machine according to the invention comprises a rotor (3) with blades (31), whereas the rotor includes (3) arms (43) provided with a rotatable carrier (4), to the central part of which (41) a drive shaft (2) is attached perpendicularly to the carrier's plane of movement (4). The base (1), is adapted for placement of the drive shaft (2). A rotating coupling of the central wheel (6) and the drive shaft (2) is created around the axis (21) of the drive shaft. On the outside end (42) of each arm (43) of the carrier (4) and satellite (5) is installed in a rotatable way with a coaxially attached blade (31). The satellite (5) is coupled with the central wheel (6) by kinematic coupling (7) with low-range revolutions of the satellite (5) in the opposite direction (b), than the direction (c) of rotation of the carrier (4). The central wheel (6) is, in relation to the base (1) set in one of three movement configurations, of which in the first configuration it is immovably fixed, in the second configuration it is adapted for positioning and subsequent locking, and in the third configuration it is adapted for controlled return positioning between two reversal points.

## Description

### Structural design

A non-positive-displacement fluid machine, whether it is specified for working in air, water or on dry land has a rotor 3 with blades 31 for the transfer of impact force S from or to a fluid environment. The term fluid environment means air or water, and potentially also their mixtures with snow, sand or even mud. Transfer of impact force S from and fluid environment takes place in the case of driven non-positive-displacement fluid machines, which are connected to a generator 23 of energy, while transfer of impact force S to a fluid environment occurs with driving non-positive-displacement fluid machines, powered by motors 25. Representing the first group are wind, or air turbines, respectively, while the second group includes, for example, water boats or flying machines of the drone type. For transfer of torque between the rotor 3 and some power generating machine containing a motor 25, generator 23 a motor-generator 24, every non-positive-displacement fluid machine is fitted with a drive shaft 2, which is coupled and/or adapted for coupling with one of the abovementioned power generating machine, as will be shown in the following examples.

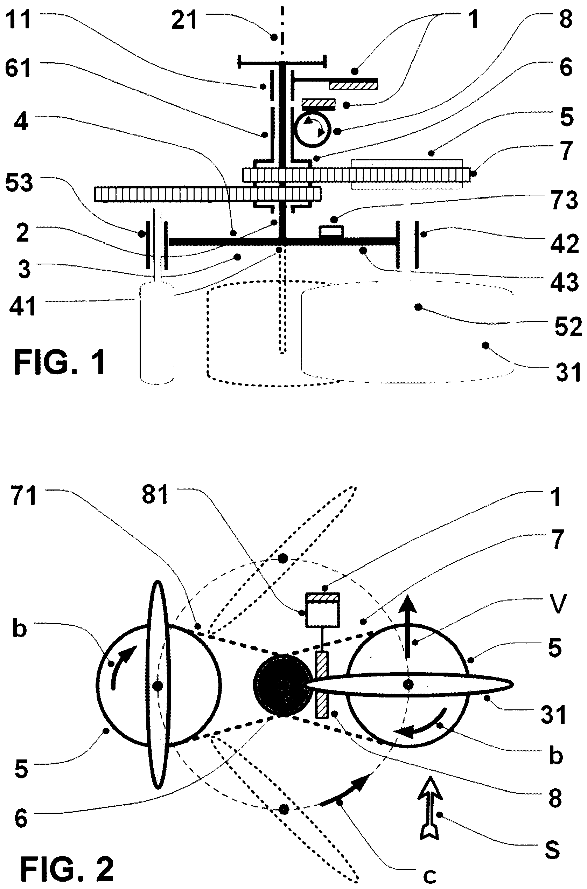

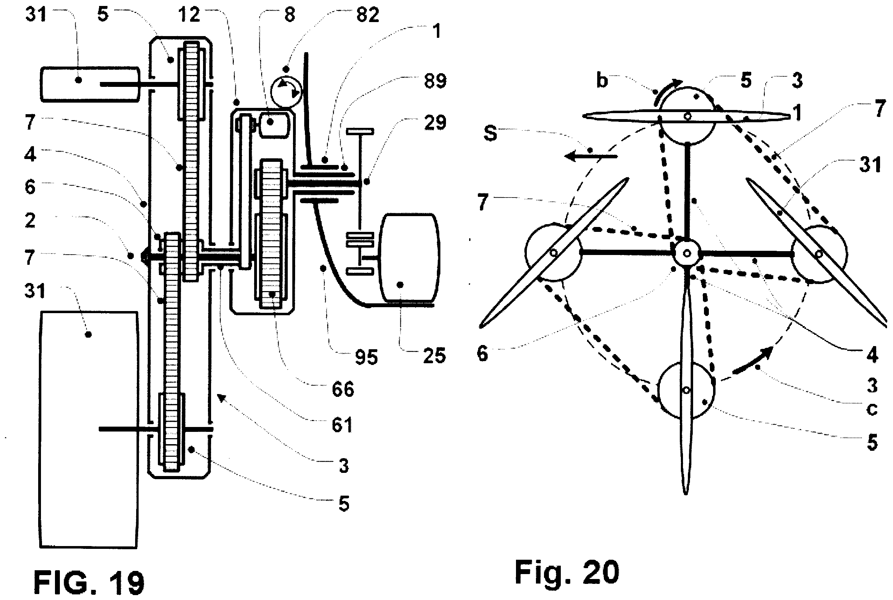

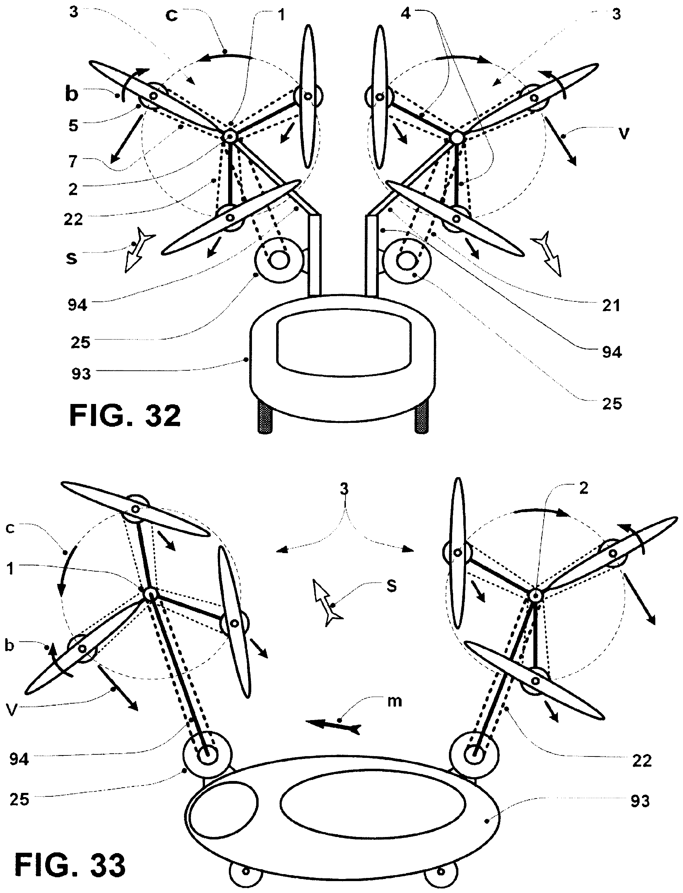

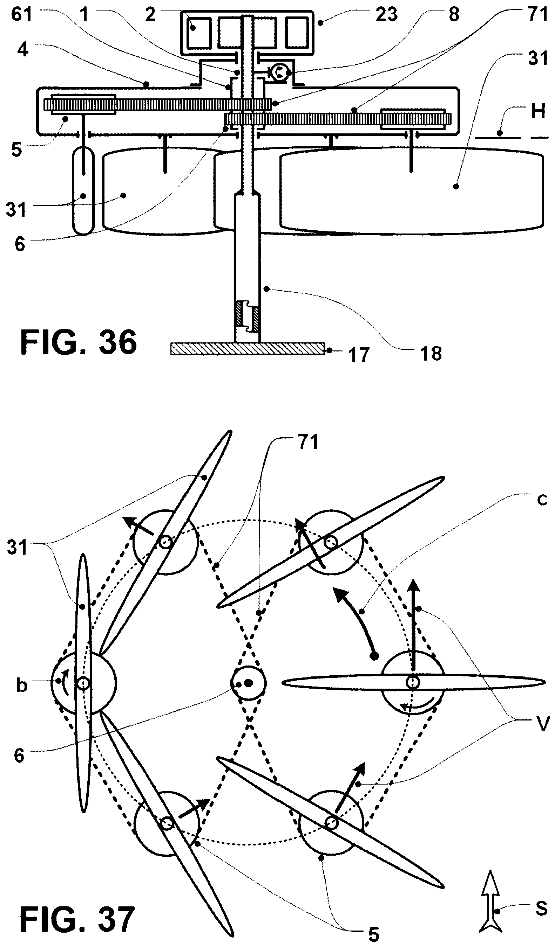

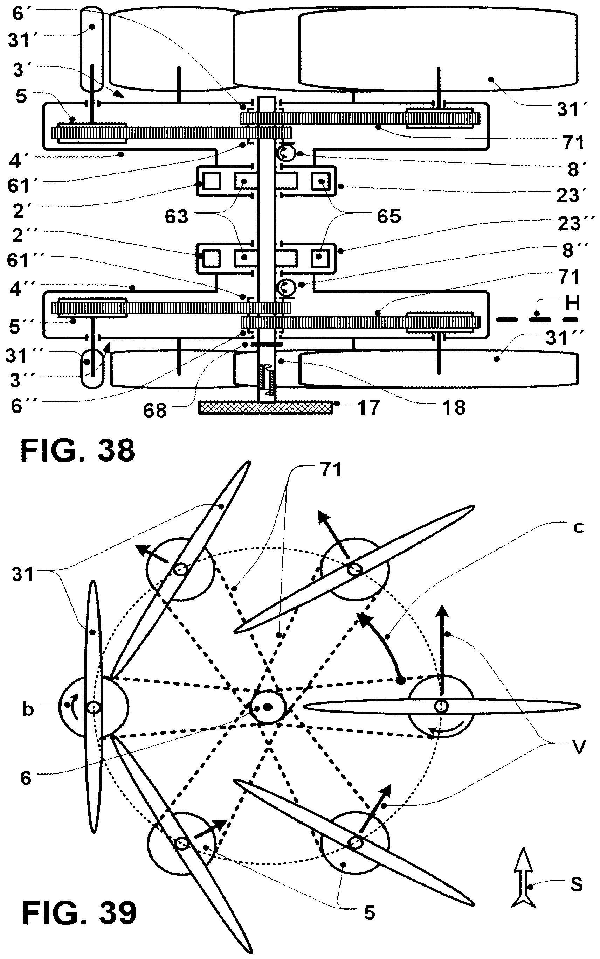

Whether we are dealing with a driven or driving non-positive-displacement fluid machine, its rotor 3 contains a turning carrier 4 fitted with at least one arm 43. In the examples of execution, carriers 4 with two arms 43 (Fig. 1, 2), with three arms 43 (Fig. 32), and with four arms 43 (Fig. 20) or six arms 43 (Fig. 37, 39) are shown. A drive shaft 2 is attached to the central part 41 of the arm 43 perpendicular to the movement of the carrier 4.

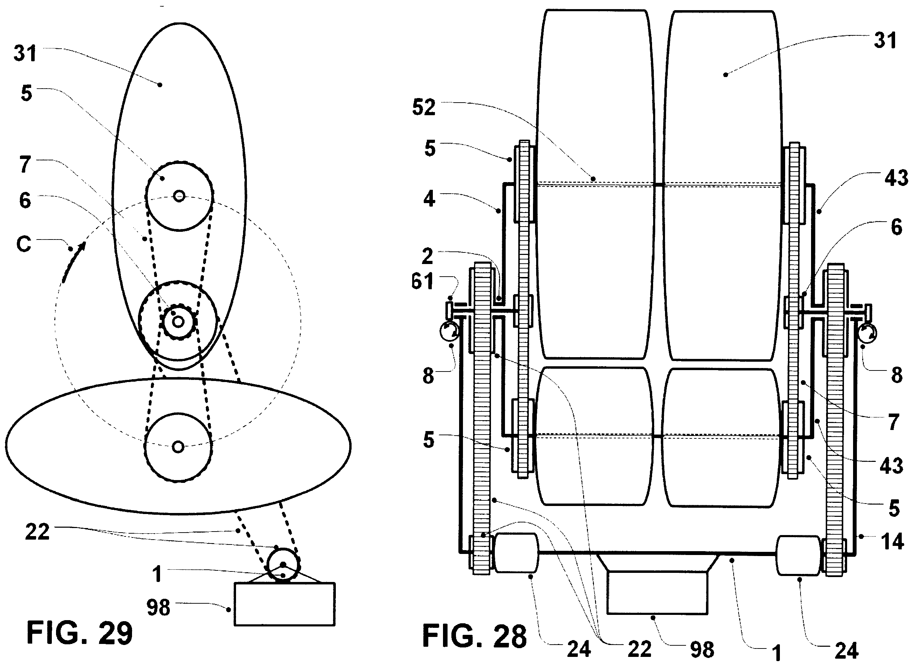

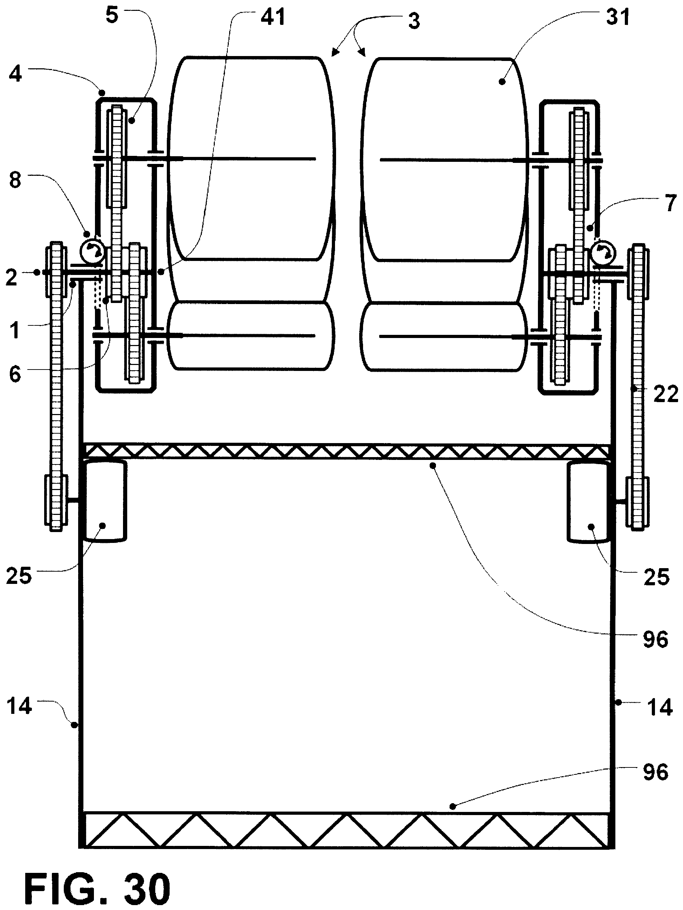

In the central part 41 of the arm 43 and rotary bond of the central wheel 6 and the drive shaft 2 is simultaneously created around the axis 21 of the drive shaft 2. This rotary bond of the wheel 6 with the drive shaft 2 most commonly has an adjusting shaft 61. However, there also exists an embodiment of the rotary bond without an adjusting shaft 61 (Fig. 30). And rotary bond with an adjusting shaft 61 may be implemented in one of two embodiments. In one embodiment, a drive shaft 2 rotatably placed in the adjusting shaft 61 (Fig. 1), and, on the contrary, in another embodiment, the adjusting shaft 61 is rotatably placed in the drive shaft 2 (Fig. 28).

In both cases, the adjusting shaft 61 is centrally placed in relation to the drive shaft 2 and firmly connected with the central wheel 6.

On the outside end 42 of each arm 43 a satellite 5 is rotatably embedded in the satellite bearing 53. and blade 31 is coaxially connected to the satellite 5 using and pin 52. Its material and design depends on the environment in which the blade 31 will be moving. The satellite 5 is coupled with the central wheel 6 by constant kinematic coupling 7. Whatever its embodiment may be, constant kinematic coupling 7 in most cases shows a gear slowing ratio of 2:1 with revolutions of the satellite 5 in the low range in the opposite direction b, than the direction c of the rotation of the carrier 4.

Part of a non-positive-displacement fluid machine is the base 1, which is adapted for embedding of the drive shaft 2. Embedding is implemented either directly with the anchor bearing 11 (Fig. 1), foot bearing 83 (Fig. 11) or using other parts (Fig. 28).

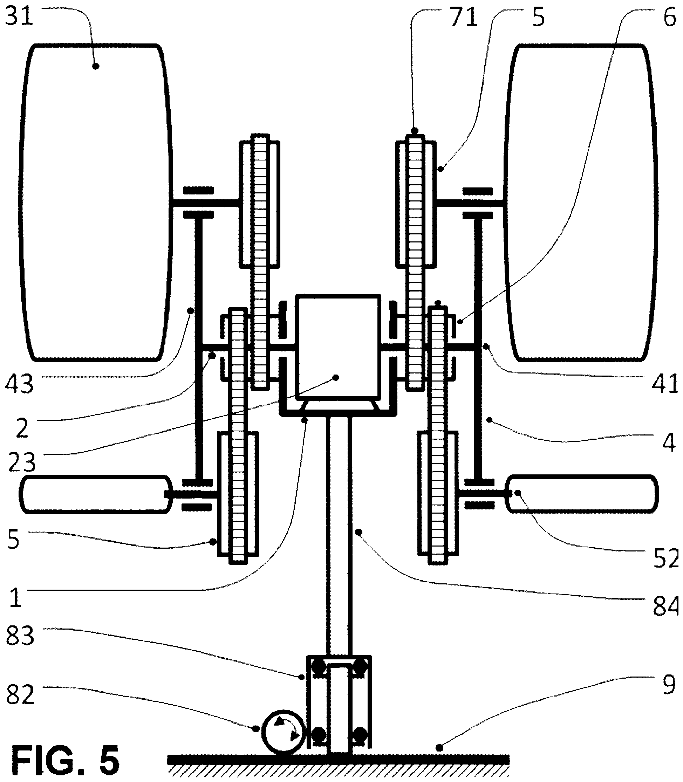

A central wheel 6, which is basis of the constant kinematic coupling 7, is set into one of three movement configurations in relation to the base 1. In the first configuration, it is immovably fixed (Fig. 5), in the second configuration it is adapted for positioning and subsequent locking (Fig. 1), and in the third configuration it is adapted for controlled return positioning in both directions.

In the case of application of the drive shaft 2 and the adjusting shaft 61, the adjusting shaft 61, in the second movement configuration is coupled with the setting mechanism 8, which is mounted on the base 1. This setting mechanism 8 is adapted not only for immovably fixing the central wheel 6, but also for its positioning in the angle required by operating conditions, namely performance regulation, as will be explained in the section describing the machine's function.

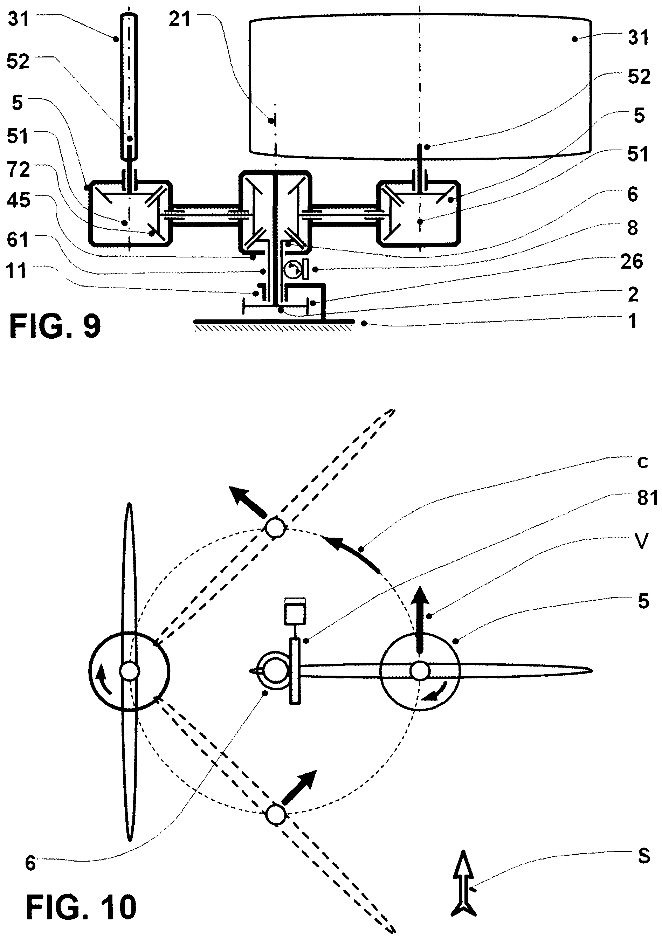

The setting apparatus 8 can consist of a manually adjustable mechanism of the self-locking screw mechanism type, but it is more advantageous if it contains a servomechanism 81, which is mounted on the base 1 and which is adapted for positioning the adjusting shaft 61 and its locking in relation to the base 1 (Fig. 10).

If the setting apparatus 8 is to be able, within the scope of a third movement configuration, to reverse the central wheel 6 in a controllable manner, this setting mechanism 8, or its servomechanism 81, respectively, is coupled with a torque 73 sensor (Fig. 1), which is modified in at least one element in the group containing the arm 43 carriers 4 a drive shaft 2. The sensor 73 is coupled with the setting mechanism 8 via one of the communication elements belonging in the group that includes, for one, and controlling computer, and then also an internet communication protocol with the Internet of Things (IoT).

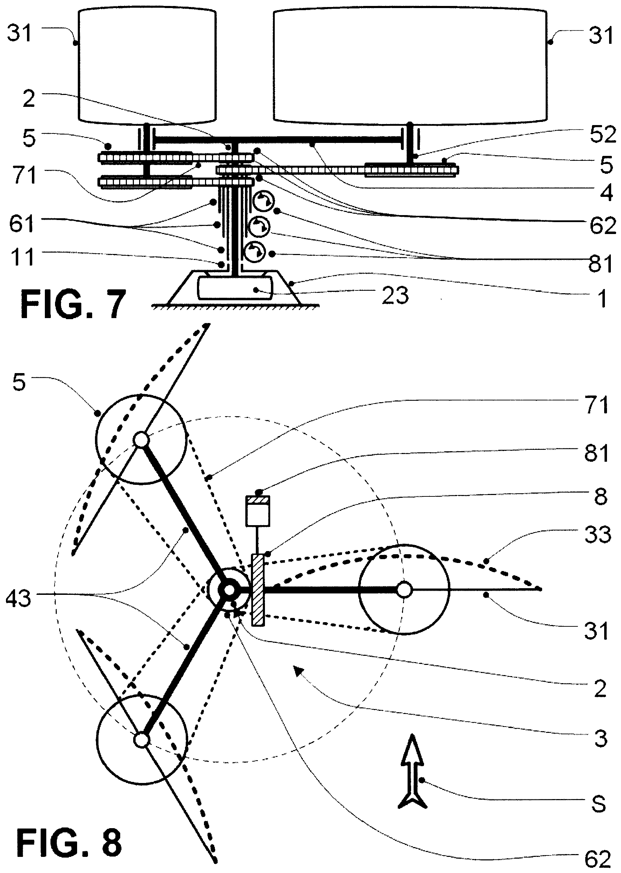

The types of setting mechanisms 8 discussed up to this point can turn all satellites 5, on their axes and thereby also the blades 31 by an identical angle in relation to the position angle of the corresponding arm 43 of the carrier 4. If, however, it is necessary to position each of the blades 31 by a different, non-identical angle (Fig.7), namely to adjust for higher energy transfer performance, the central wheel 6 is divided into coaxial, identical segments 62, of which each segment 62 is firmly connected with its adjusting shaft 61. The setting mechanism 8 contains servomechanisms 81 in a number identical with the number of segments 62. The setting mechanism 8 is thus adapted for independent turning of the adjusting shafts 61 and their locking in relation to the base 1, and potentially for reverse positioning of the adjusting shafts 61 in relation to the base 1.

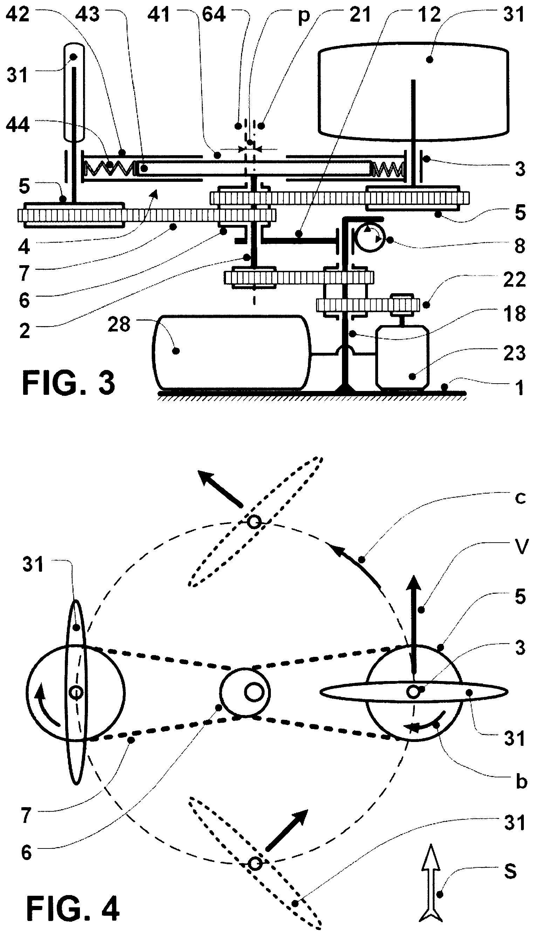

In a different form of positioning blades 31, in particular with wind turbines, the drive shaft 2 is eccentrically rotatably embedded in the central 6, which is attached at one end of the boom 12 (Fig. 3). The pitch diameter of the central wheel 6 is half that of the pitch of the satellite 5. The eccentricity p is determined by the distance of the axis 21 of the drive shaft 2 from the axis 64 of the central wheel 6. The other end of the boom 12 is rotatably embedded with an advantage on the hollow column 18, which is firmly anchored in the base 1. And control cable can be run inside the hollow column 18. The hollow column 18 is parallel with the drive shaft 2. And setting mechanism 8 is mounted on the base 1, fitted with a servomechanism 81 not shown, which is adapted for positioning of the boom 12 and its locking in relation to the base 1. The outside end 42 of each arm 43 of the carrier 4 is slidably mounted in a radial direction in relation to the central part 41. Simultaneously, the outside end 42 of the arm 43 is connected with the central part 41 by and spring 44 with force effects for non-slipping engagement of the constant kinematic coupling 7. The cited example of implementation involves and compression spring 44, that gives tension to the toothed belts as one type of constant kinematic coupling 7. The drive shaft 2 is coupled with a generator 23 by the transmission apparatus 22, which, in the context of potential applications, is connected to a battery 28.

Constant kinematic coupling 7 between the central wheel 6 and the satellite 5 can be created by various elements. There, where the adjusting shaft 61 is parallel with the axis of the satellite 5, an advantageous implementation rests in the use of non-slip endless elements 71, each of which is wrapped around the central wheel 6 and at least one of the satellites 5. An embodiment with a drive for a sole satellite 5 is applied with a carrier 4, which is fitted with two arms 43 (Fig. 1), and even with a carrier 4, which contains three arms 43 (Fig. 7), and for a carrier 4, which contains six arms 43 (Fig. 39). In other cases, where the carrier 4 is provided with four, or six, respectively, arms 43 (Fig. 20, 37) constant kinematic coupling 7 is advantageously created by a non-slip endless element 71, which loops around the central wheel 6 and two or three, respectively, satellites 5. A non-slip, endless element 71 may be created by and chain, but it is advantageous, especially from the weight perspective, that the non-slip endless element 71 is and toothed belt.

Another embodiment of the constant kinematic coupling 7 is based on the use of gears. In this case, constant kinematic coupling 7 contains an odd number of inserted gears 72, by which the central wheel 6 is interconnected with the satellite 5 (Figs. 9, 11, 12 and 14). In the design examples, only one inserted gear 72 is applied in the chain of each of the constant kinematic couplings 7.

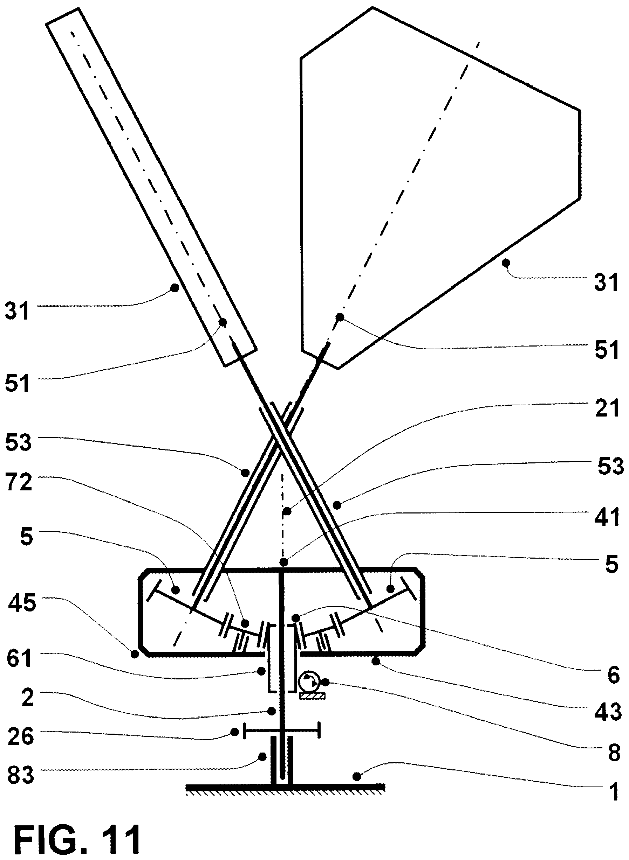

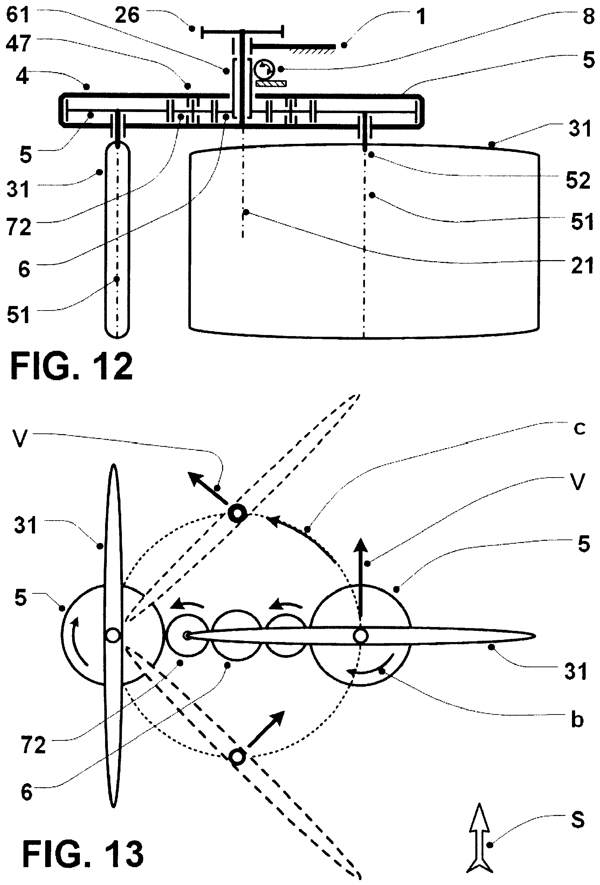

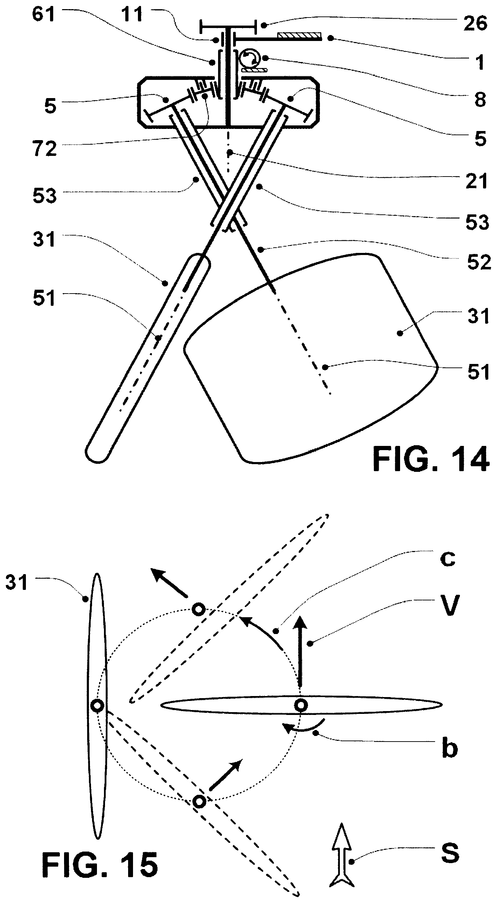

The gearing with which the inserted wheel, 72, central wheel 6 and satellite 5 are provided is, in some cases, executed as spur gearing (Fig. 12), and in other cases as bevel gearing (Figs. 9, 11, 14). Spur gearing can only be used in cases when the axes 51 of the satellites 5 are mutually parallel (Fig. 12), and are therefore also parallel with the axis 64 of the central wheel 6, resp. with the axis 21 of the drive shaft 2. In contrast to this, bevel gearing must be used in cases where the axes 51 of the satellites 5 are skewed, either mutually or in relation to the axis 21 of the drive shaft 2 (Figs. 11 and 14). Bevel gearing can, however, also be used in cases where the 51 of the satellites 5 are parallel (Fig. 9).

The design features described so far are applicable to non-positive-displacement fluid machines for both air and water environments. Figures 9 and 11 show wind turbines anchored in the ground. For regulation, these turbines are provided with a setting mechanism 8 turning the adjusting shaft 61 as a whole, while Fig. 7 shows and wind turbine with individually turning blades. 31. For power transfer to a generator (not shown), the air turbines of Figs. 9 and 11, have and modified drive wheel 26, while the air turbine according to Fig. 7 is provided with a directly connected generator 23. Similarly, the generator 23 shown is coupled, or directly connected, respectively, to the drive shaft 2 of the air turbine according to Fig. 3. With this turbine, the use of the force of the wind force S not only in the generator 23 but also in the air accumulator 28 is shown. The torque from the drive shaft 2 can also be transferred via and transmission device 22 to a driven device (not shown).

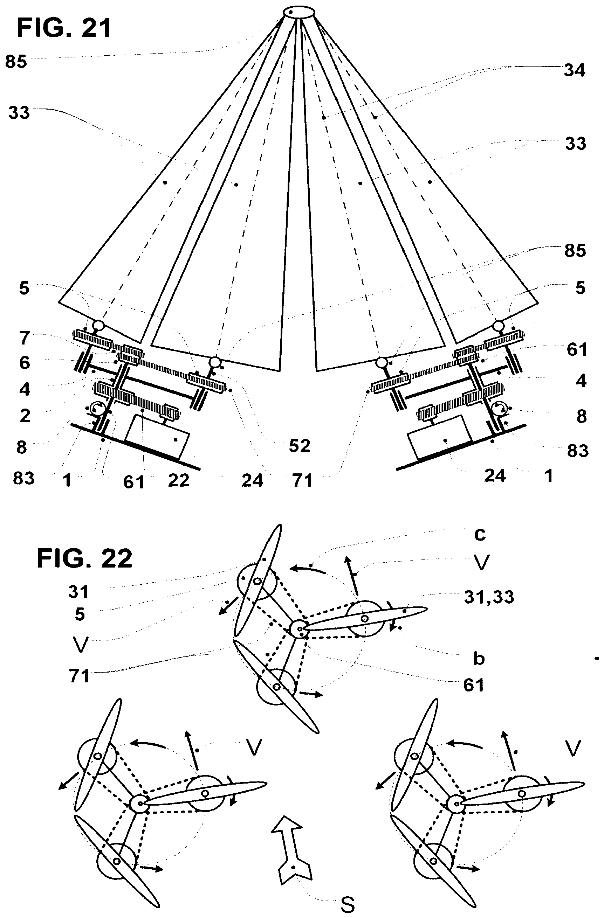

Similarly create are boat drive mechanisms (Figs. 1, 12, 14), with the difference that with the air turbines, the blades 31 are thrust upward, while for boats they are lowered down into the water. However, the reality is the fact that, both with some types of air turbines and with some types of ship propulsion devices, the axes 51 of the satellites 5 are non-parallel (skewed) (Figs. 11, 14), and parallel in others (Figs. 1, 9, 12). The blades 31, of the satellites 5, are also inclined at the same angle. The blades 31 are in most cases made of rigid plates. However, in the case of air turbines, they may also be formed by and frame 32, on which and tarp is stretched 33 (Figs. 8, 22).

When choosing the power control device, for air turbines, the direction of the drive shaft 2 is important. For vertical drive shafts 2, it is advantageous to use and setting mechanism 8 that is coupled with an adjusting shaft 61, whereas for the horizontal drive shaft 2 of Fig. 5, the drive shaft 2 is rotatably embedded directly into the central wheel 6 which is attached to the base 1. A generator 23, which is coupled with a drive shaft 2, is mounted on the base 1. In statically and dynamically advantageous embodiments, two drive shafts 2 are mounted symmetrically on the base 1, each with its own rotor 3. The base 1 is mounted on a fixed pole 84 which is perpendicular to the drive shaft 2. The rigid pole 84 is rotatably embedded in a foot bearing 83, which is anchored to a stationary foundation 9, in particular, to the ground. The fixed pole 84 is provided with a pivoting and locking device 82 which acts to effect power regulation.

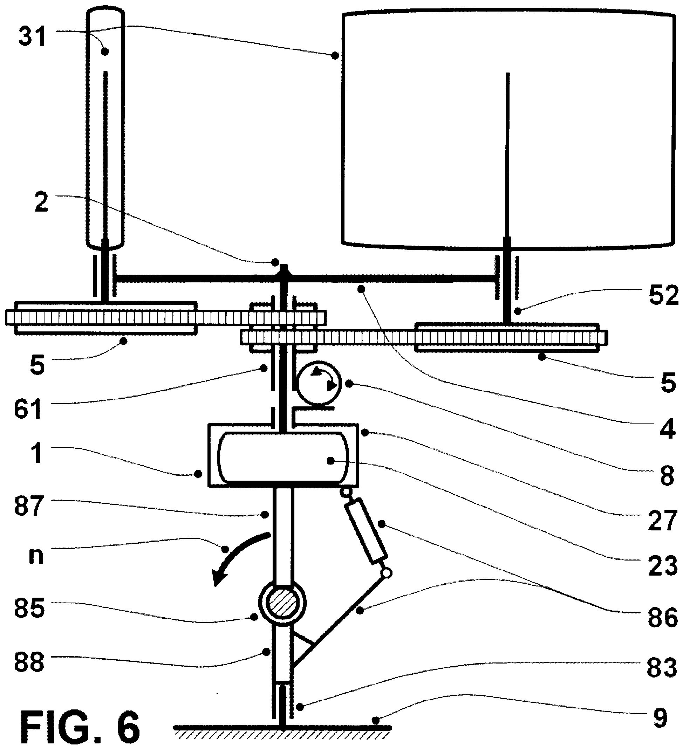

To control the output of a non-positive-displacement fluid machine of the air turbine type, with a vertical adjusting shaft 61, either in one piece or assembled from individual segments 62 (Fig. 7) where the drive shaft 2 is coupled with a generator 23 mounted on the base 1, (Fig. 6), in which the base 1 is attached to the upper part 87 of a pole. The bottom part 88 of the pole is mounted on a stationary solid foundation 9 either firmly or with the possibility of rotation, and connected with the upper part 87 by a joint 85. A tilting device 86 is installed between the upper part 87 and the bottom part 88 of the pole.

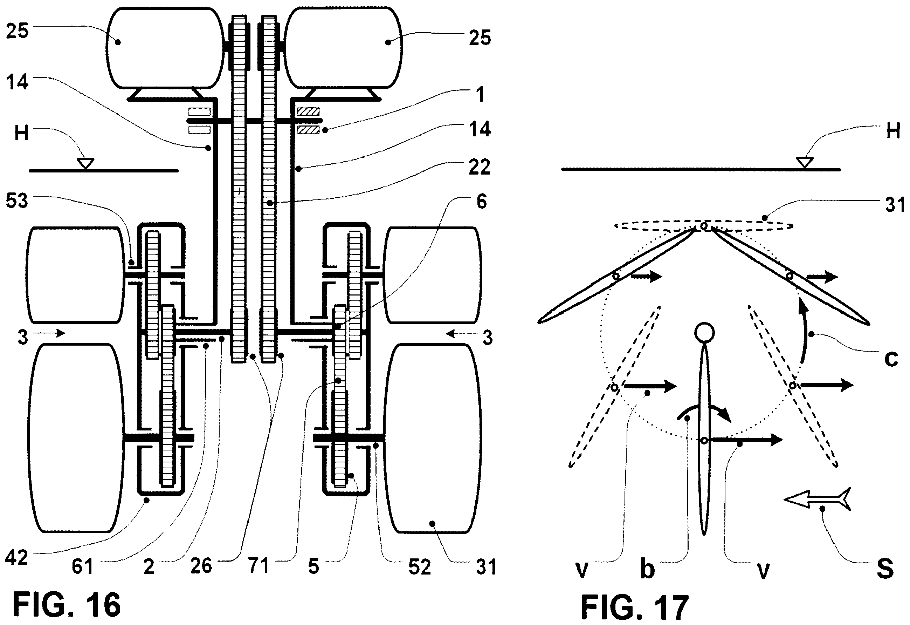

It has been stated that a non-positive-displacement fluid machine can also be used for boat or ship propulsion. One embodiment of the boat drive apparatus comprises a drive shaft 2 that has an essentially horizontal position, and is centrally, rotatably embedded in the adjusting shaft 61 (Fig. 16). The adjusting shaft 61, together with the central wheel 6 is connected to the lower end of the side piece 14. The upper end of the side piece 14 is pivotally connected to the base 1, which is provided in the boat's hull 95 (not shown). A motor 25 is attached to the upper end of the side piece 14 and is connected to the drive shaft 2 via the transmission apparatus 22. In the case of the positioning of the boat's propulsion device, it is advantageous on the rear side, whereas in the case of a side-position, it is necessary that the propulsion drive mechanism comprises two symmetrical rotors 3 whose blades 31 are fully immersed under the water level H when operating.

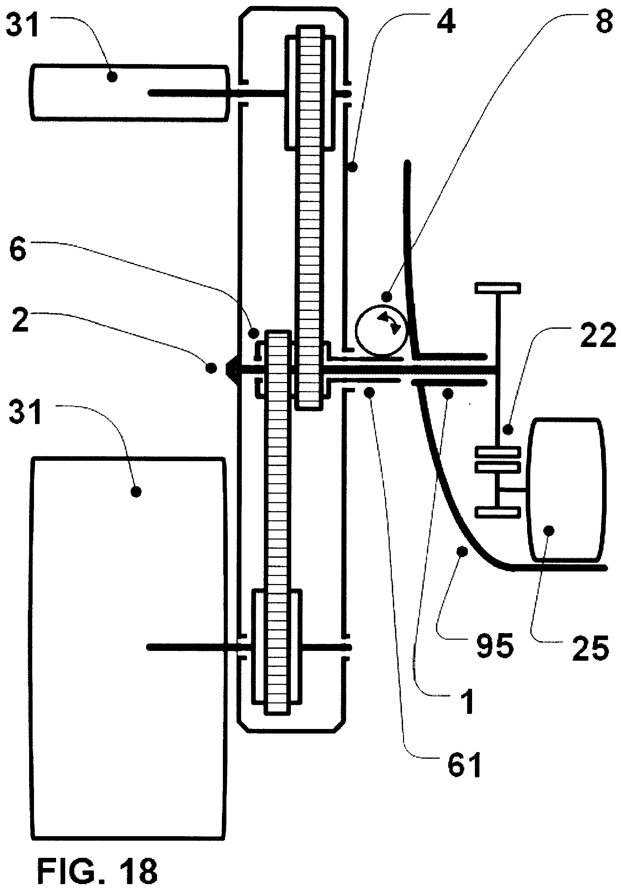

Another type of marine propulsion device utilizing the non-positive-displacement fluid machine according to the invention is adapted for lateral propulsion (Fig. 18). The drive shaft 2 essentially has a horizontal position, and is rotatably embedded in the base 1 which is arranged in the hull 95 of the ship. At the same time, a motor 25 is mounted on the base 1, which is coupled with the drive shaft 2 via the transmission apparatus 22. The adjusting shaft 61 is mounted in a rotatable way on the drive shaft 2, and on it the rotatable carrier 4 is also mounted. Just as in some of the other applications, the adjusting shaft 61 coupled to the setting mechanism 8. The carrier 4 may be fitted with two or more arms 43 (Fig. 20) and thus with the same number of blades 31.

The described boat propulsion mechanism is suitable for waters with a constant, or sufficient depth, respectively. In the case of fluctuating depth, it is necessary to raise the rotor 3 prior to entering shallow waters. In this design, the drive shaft 2 is also rotatingly embedded in the adjusting shaft 61. The adjusting shaft 61 is rotatingly set in the boom 12. For the purpose of lifting the rotor 3, the boom 12 is set in the base 1 with a pivot bearing 89, and the base is set in the hull 95 (Fig. 19). The boom 12 is coupled with the positioning and locking apparatus 82, which is adapted for turning the boom 12 in its pivot bearing 89. a motor 25, coupled with the drive shaft 2, is set in the base 1. For this purpose, the transmission apparatus 66 is arrayed in the boom 12 between the drive shaft 2 and a parallel shaft 29 coupled with the motor 25. Further, modified in the boom 12 is the setting apparatus 8, which is coupled with an adjusting shaft 61.

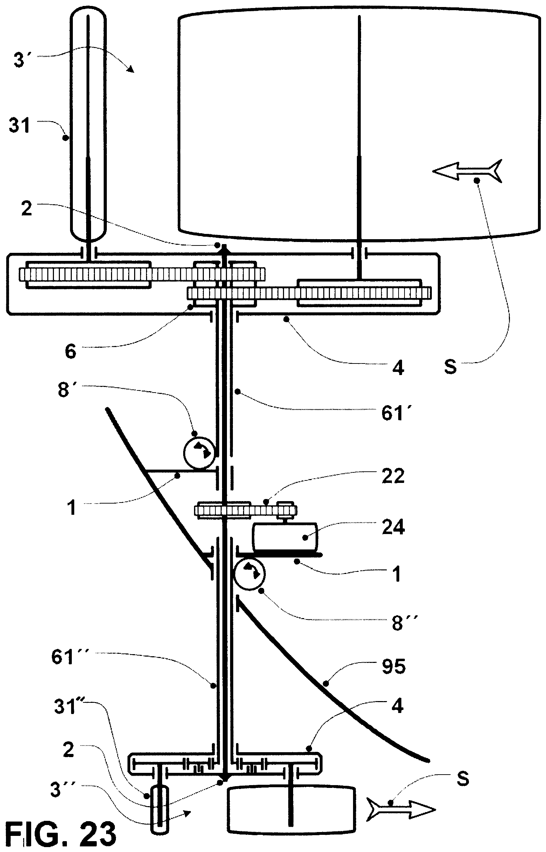

If the boat drive mechanisms described up to this point relied on motors 25 for to move blades 31, the implementation according to Fig. 23 uses wind energy, which is transformed into kinetic energy of the lower blades 31" submersed in the water, for boat propulsion. For this the non-positive-displacement fluid machine contains an upper rotor 3', active as a wind turbine, and a lower rotor 3", which is part of the boat drive apparatus. The drive shaft 2 is rotatably set into the base 1, in a vertical position, whereas the base is set into the hull 95 of the boat. The upper adjusting shaft 61', with the upper setting mechanism 8' is rotatingly embedded in the upper end of the drive shaft 2. The lower adjusting shaft 61" with the lower setting mechanism 8" is rotatingly embedded on the lower end of the drive shaft 2. The drive shaft 2 is coupled with a motor-generator 24, serving, for one, as a backup for driving force in times of weak wind, or when and higher speed of the boat is desired, and for another to allow storing of excess energy in times of high winds or when the boat is at anchor. The drive shaft 2 is firmly connected to the upper end with the upper rotor 3', adapted for the transfer of impact force S from the streaming air and at the lower end with the lower rotor 3" adapted for the transfer of impact force S to the water.

Wind energy is also used in another application of a non-positive-displacement fluid machine, and that in the form of a sailboat. A non-positive-displacement fluid machine contains at least one, and advantageously with the stability of the sails 33, three rotors 3, whose adjusting shafts 61 are set in foot bearings 83 arranged on the base 1 integrated in the hull (not shown) 95 of the boat. And setting mechanism 8, is coupled with each adjusting shaft 61. The drive shaft 2 is coupled with the motor-generator 24, via the transmission apparatus 22. Every pin 52 of the satellite 5 is connected by a joint to the lower parts of the sail 33 as blades 31. The sail-bearing 33 element is the mast 34, whose bottom section is part of the joint connection to the satellite 5, whereas the upper parts of the sails, or their masts 34, respectively, are anchored in a common joint 85. In the design example, the non-positive-displacement fluid machine contains three rotors 3 (Figs. 21, 22), which are placed on the deck (not shown). The rotors 3 are configured so that the axes 61 of their adjusting shafts 6 are placed at the imaginary edges of a regular pyramid, preferably triangular, which is the optimal design for their stability from a structural standpoint.

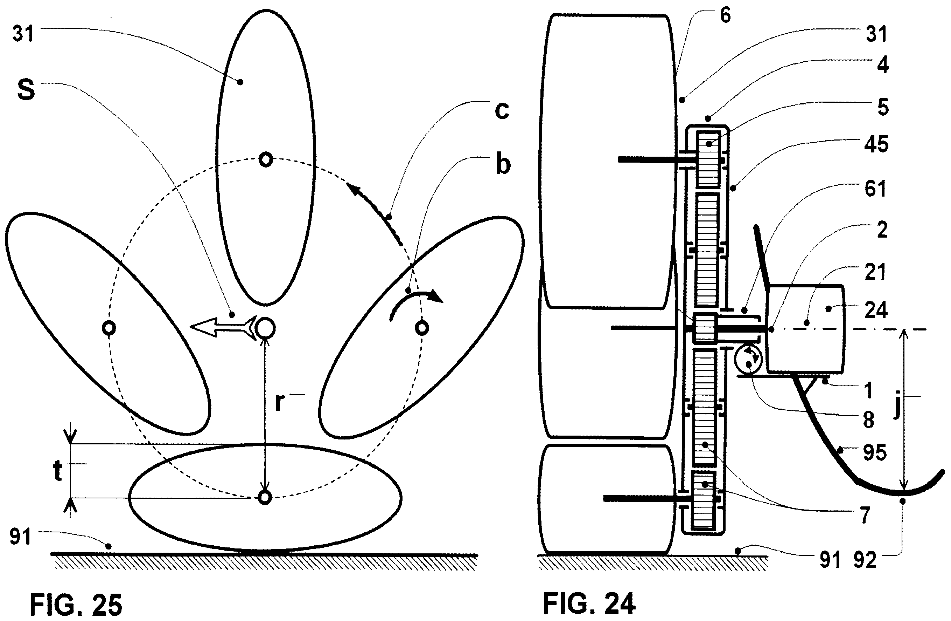

The amphibious vehicles known so far had different drives for movement on dry land and in the water. With a non-positive-displacement fluid machine utilized as an amphibious transport machine according to the embodiment shown in Figs. 24 and 25, it is possible to use the same blades 31 for both environments. For this purpose, a horizontal drive shaft 2 is coupled to the motor-generator 24 which is mounted on the base 1 built into the hull 95 of the amphibious vehicle. The setting apparatus 8 is mounted on the base 1 and the carrier 4 is formed by a sealed housing 45. For free-wheel movement on the land, the distance of the axis 21 of the drive shaft 2 from the bottom 92 of the body 95 is less than the sum of the size of the radius r of the carrier 4 and the half thickness t of the blades 31. The blades 31 are in the form of flattened tires that are both durable for movement on land while also suitable for movement in water.

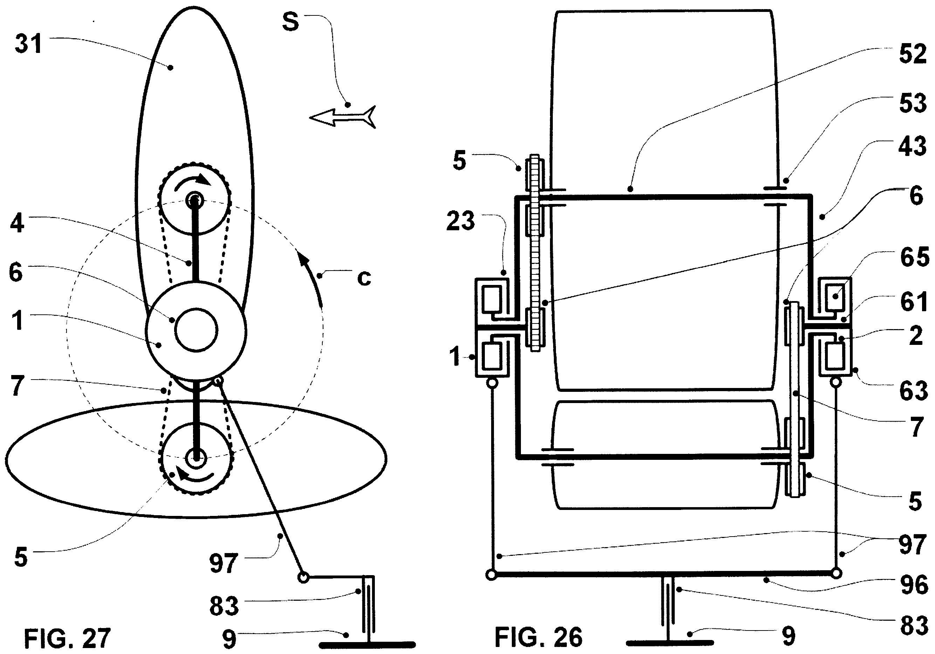

A non-positive-displacement fluid machine according to the invention can be used, for example, to produce energy, in particular, electric or wind energy, utilizing a tethered balloon. In this case, the carrier 4 contains at least two arms 43 and the adjusting shaft 61 is centrally, rotatingly set in the drive shaft 2 (Figs. 26, 27). The adjusting shaft 61 is shown here in a fixed position, without a setting mechanism 8, which is usually advantageous with a tethered balloon, and that especially in flat terrain with a mostly horizontal wind direction. When placing the balloon in hilly terrain, it is advantageous to supplement the equipment with a setting apparatus 8, allowing controlled reaction to change in wind direction, either from the slope downwards or up the slope. The base 1, is attached to the adjusting shaft 61 and in such a way that the adjusting shaft 61 is either in a fixed, unmoving position or rotatingly connected to the base 1, using the setting mechanism 8. The stationary part 63 of the generator 23 is attached to the base 1. For a generator 23 of electric current, the stationary part 63 is a dynamo stator or an alternator, while for a compressor this involves its housing. The rotating part 65 of the generator 23, which is the anchor in the case of an electric machine or the rotating part of the air compressor, respectively, is connected to the drive shaft 2. The generator 23 is connected by a flexible, binding, energy conducting medium 97 beneath the base 1 with a bridging connector 96, which is rotatingly set in a foot bearing 83, firmly anchored into a solid, non-moving foundation. An energy-conducting medium 97 is a conductive cable or air hose. The blades 31 in some cases may have a smaller unit mass than air, and in others not, especially if they have a slim cross-section.

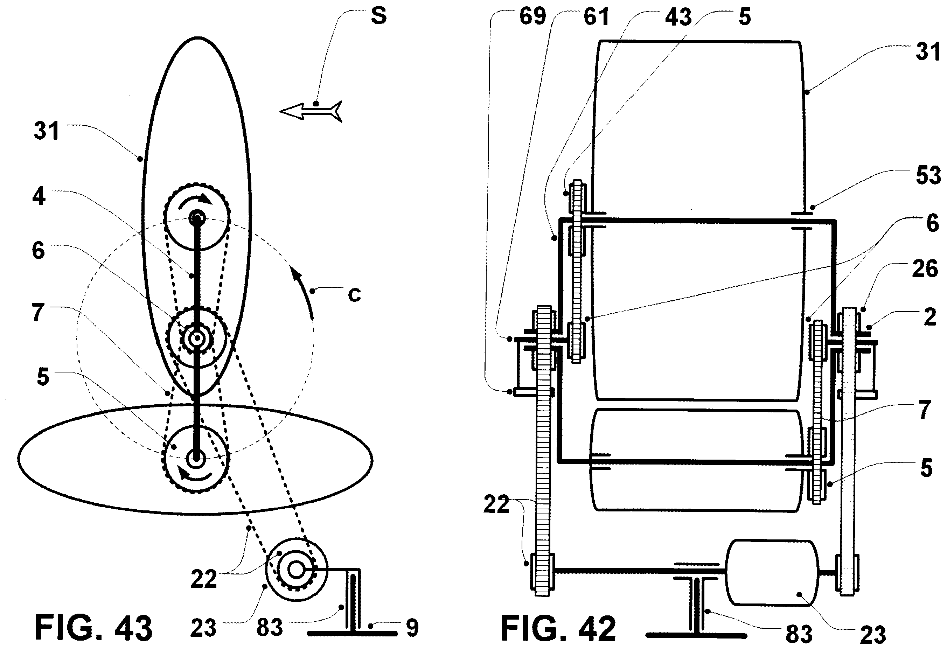

Another version of the application of a non-positive-displacement fluid machine for producing energy is shown on Figs. 42, and 43. This is also a tethered balloon for the generation of energy, which, however, is suitable for use at low altitudes. For example, on a windward slope near buildings, it is possible to more suitably transfer energy downward from this balloon using not two electricity-conducting cables or air-conducting hoses, but mechanically, with two belt drives. This has its advantages in areas of stronger ground winds, especially since the blades 31 carry a much smaller load without generators 23, and they can be lighter, and flatter, and thus more efficient. The construction is similar to the previous one, so that the carrier 4 has at least two arms 43 and each adjusting shaft 61 is centrally rotatably set in the drive shaft 2. A drive wheel 26 with a firmly connected drive shaft 2, which is coupled with a generator 23 by a transmission apparatus 22 in form of a belt. Both adjusting shafts 61 must even in this case have a controlled position in relation to the solid base (ground), which is resolved by having a weight 69 slidingly placed against the belt of the transmission mechanism 22, which is attached to the adjusting shaft 61. The weight 69 has sliding or rolling bodies, which skid or roll against the body of the belt. The generator 23 is rotatingly set perpendicular to its axis in a foot bearing 83 firmly anchored in a solid, unmoving foundation 9.

A non-positive-displacement fluid machine can also find application as a flying machine employing the same method as a balloon (Figs. 28, 29). In this application, the machine has two carriers 4, of which one is placed in the flight direction on the left side and the other the right side, and both are mutually interconnected by penetrating pins 52. Each of the two carriers 4 has at least two arms 43, on the ends of which are satellites 5 with blades 31, whereas each of the carriers 4 is hooked up to an independent mechanism of constant kinematic coupling 7. An independent adjusting shaft 61 is associated with each of the carriers 4, and centrally, rotatingly set in the drive shaft 2. A side piece 14 is suspended on each adjusting shaft 61, and is connected to a motor 25, or motor-generator 24, which is coupled with the drive shaft 2 by the transmission apparatus 22. A gondola 98 is suspended under the base 1. The blades 31 have a lower unit mass than air.

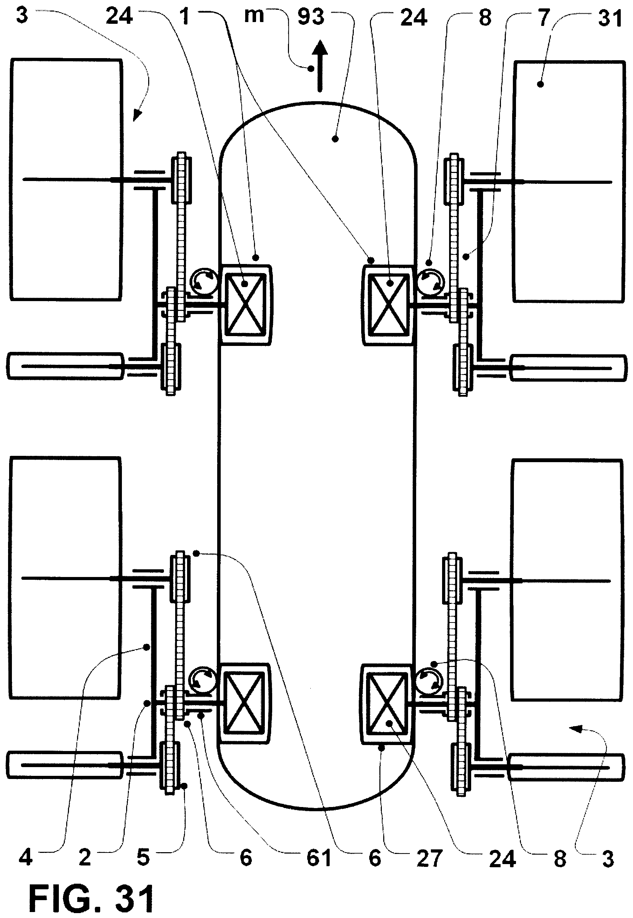

In addition to balloons, a non-positive-displacement fluid machine according to the invention can be used as a driving unit of drone type craft, etc. In one version (Fig. 31), the non-positive-displacement fluid machine is arranged so that the drive shaft 2 is coupled with a motor-generator 24, which is placed on a base 1, on which a setting mechanism 8 is simultaneously anchored. The drive shaft 2 is placed on the same plane as the parallel drive shaft 2 of at least one other rotor 3 of identical, but mirrored execution. The bases 1 of all rotors 3 are symmetrically distributed on the upper part of the cockpit 93. The rotor 3 carriers 4 are placed along the sides of the cockpit 93, whereas the drive shafts 2 have a direction perpendicular to the direction m of movement of the cockpit 93. Flight stability can be advantageously achieved using four rotors 3 with identical parameters.

In another alternative of a drone (Figs. 32, 33), a boom 94 with a rotatingly set drive shaft 2 is attached to the base 1, under which the cockpit 93 is suspended. A motor 25, which is coupled to the transmission apparatus 22 with the drive shaft 2 is attached to the boom 94. The cockpit 93 is provided with a second boom 94 which is symmetrically equipped with a second rotor 3 coupled by a second gear 22 with a second motor 25. In one application (Fig. 33) the drive shafts 2 have a direction perpendicular to the direction m of motion of the cockpit 93, whereas at least one rotor 3 is arranged above the front of the cockpit 93 and at least one rotor 3 above the rear of the cockpit 93. In another application (Fig. 32), the drive shafts 2 have a direction parallel to the direction of motion m of the cockpit 93, one pair of parallel rotors 3 is positioned above the cockpit 93.

A non-positive-displacement fluid machine need not be used only for flying, but also as an inflatable pontoon, which is capable of flight and stopping in midair. This is useful, for example, in rescue operations or even for creating temporary bridging of a river or other obstacle. For this purpose, at least one or more carriers 4, each with at least with two, but ideally with three arms 43 (Fig. 30) are arrayed along each side of this inflatable pontoon. The drive shaft 2 of each of the carriers 4 is rotatingly embedded for one in the base 1 and secondly, in the central wheel 6. A setting apparatus 8 is coupled with each central wheel 6 anchored on the base 1. A side piece 14 is suspended below the base 1, which is interconnected by a bridging connector 96 with an opposite side piece 14 located on the opposite side of the air pontoon. The bridging connector 96 may have a different shape depending on the purpose. It can be a bridge, transport, rescue, or work unit, a viewing platform, etc. The engine 25 is attached to the bridging connector 96 or to the side piece 14. The motor 25 is coupled with the drive shaft 2 by the transmission apparatus 22.

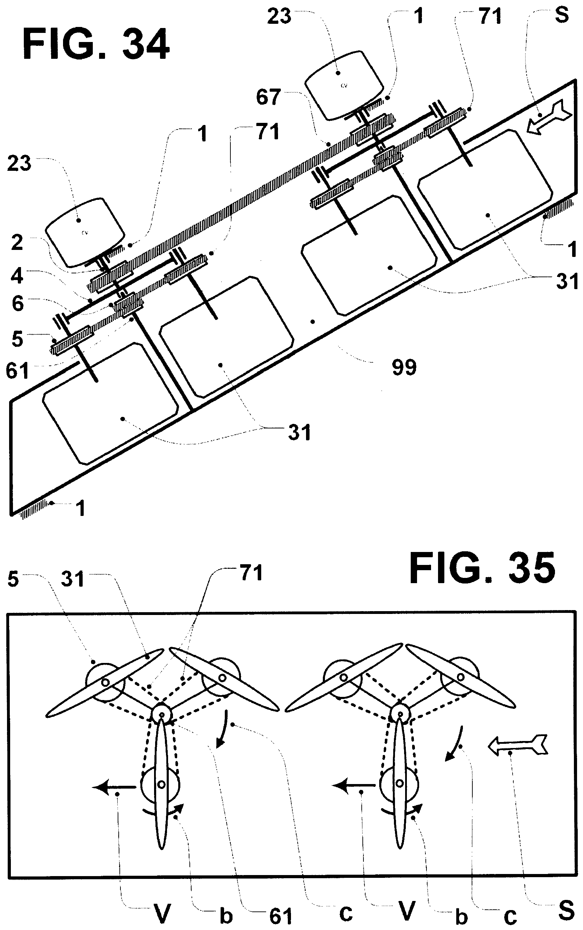

A non-positive-displacement fluid machine according to the invention can also be used to generate electrical energy in various bodies of water. For example, in the case of overflow water on river weirs, that is water with a small gradient which is guided through a trough 99 (Figs. 34, 35), the adjusting shaft 61 is firmly connected to the trough 99. The trough 99 is fixed to base 1. The blades 31 are submerged in the trough 99, while the drive shaft 2 is connected with a generator 23 which is fixed to the base 1

A non-positive-displacement fluid machine used for a water-level turbine, either for calm flowing water, or to take advantage of the energy of ocean waves, especially the breakers, is characterized by the features that (Fig. 36, 37) the base 1 is in the shape of a hollow column 18, whose upper section is enclosed by the driver 4 with blades 31 facing the lower part of the hollow column 18, whose upper part is surrounded by the carrier 4 with blades 31 that are adapted for submersion beneath the water's surface H. The drive shaft 2 is in the form of the rotary part of a generator 23, which is firmly coupled with the carrier 4. The stationary part of the generator 23 is firmly connected the hollow column 18. To the hollow column 18, on the upper end of which the adjusting shaft 61 is mounted in a rotatable way on its outside, opposite which, the setting mechanism 8. The lower end of the hollow column 18 is adapted for embedding in the bottom of the body of water by means of a base 17. In this arrangement, the generator 23 is adapted for placement above the water's surface H. The interior of the hollow column 18 is used for a cable drawing off the energy produced.

Another alternative of a firmly anchored non-positive-displacement fluid machine (Fig. 38, 39) features a base 1 also in the form of a hollow column 18, which is adapted for embedding in the bottom of the body of water by means of a base 17. On the upper part of the hollow column 18 is attached the upper rotor 3' with upper blades 31' adapted for contact with the air medium and in the lower part a lower rotor 3" with the lower blades 31" adapted for contact with a water medium (Fig. 38, 39). The upper rotor 3' contains an upper adjusting shaft 61', which is rotatingly set on the hollow column 18 and coupled with the upper setting mechanism 8'. The lower rotor 3" contains the lower adjusting shaft 61", which is rotatingly mounted on the hollow column 18 and simultaneously slidingly coupled with the lower the setting mechanism 8". The sliding placement is implemented by means of a grooved connection. The upper carrier 4' is firmly attached to the rotating part 65 of upper generator 23'. The lower carrier 4" is firmly attached to the rotating part 65 of the lower generator 23". The stationary part 63 of the upper generator 23 is firmly connected to the hollow column 18 is while the stationary part 63 of the lower generator 23" is slidingly inserted on the hollow column 18. The lower blades 31" are hollow, watertight, filled with air and their horizontal sliding movement allows permanently take a floating position in relation to the changing level of the water surface H. The lowest position of the lower rotor 3", or the lower blades 31" is set with a stop 68.

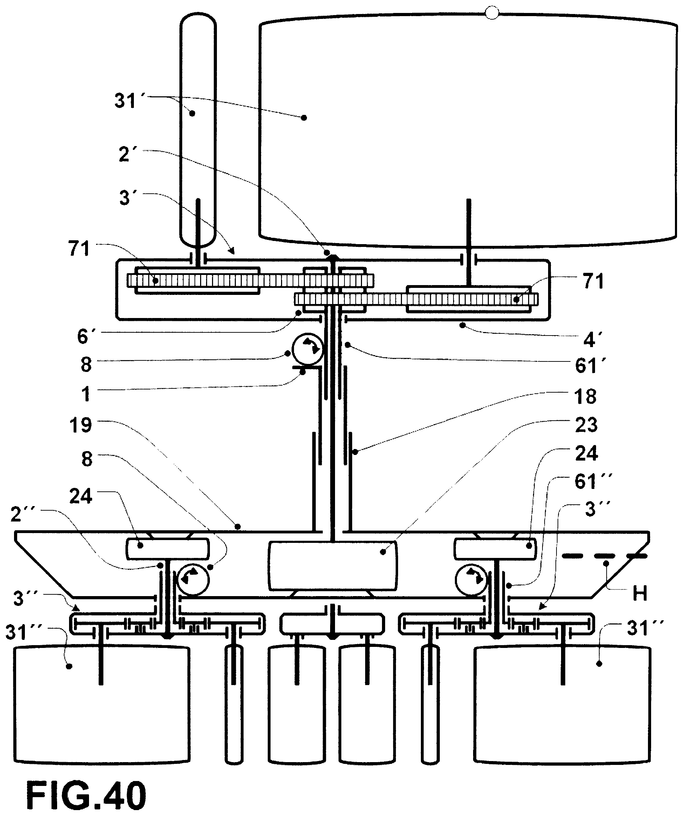

A non-positive-displacement fluid machine adapted to be positioned at surface level H is provided with a base 1 which includes a floating pontoon 19 on which at least one hollow column 18 is anchored, as shown in Fig. 40. The pontoon 19 is less dense than water. In the upper part of the hollow column 18, at least one upper rotor 3' is positioned with upper blades 31' adapted to be in contact with the air medium and the upper drive shaft 2' mounted in a rotatable way in the hollow column 18. The upper drive shaft 2' is coupled with a generator 23 fixed to the pontoon 19. Below the pontoon 19, at least one lower rotor 3" is suspended with lower blades 31" adapted for contact with a water medium. The lower blades 31" are oriented axially perpendicular to the water line of the pontoon 19, whereas they can be hollow, and for the purpose of controlling submersion, be adapted for controlled water filling. The lower drive shaft 2" is parallel with the lower blades 31", or with their axis, respectively, and is coupled with a motor-generator 24 attached to the pontoon 19. The preferred embodiment consists in the installation of three lower rotors 3" and three motor-generators 24.

A non-positive-displacement fluid machine in a floating version designed to produce electricity but simultaneously capable of rapid movement along the water surface H is partially identical to the previous embodiment, and is therefore provided with a base 1 containing a floating pontoon 19, on which at least one hollow column 18 is anchored. The upper rotor 3' is embedded in the upper part of a hollow column 18, and fitted with upper blades 31' adapted for contact with the air medium and also with the upper drive shaft 2' rotatably set in the hollow column 18, whereas the upper drive shaft 2' is coupled with a generator 23 fixed to the pontoon 19. Upper central wheel 6' is coupled with the setting mechanism 8 anchored on the hollow column 18. At least one suspension column 35 is rotatingly set on the pontoon 19, which is oriented below the water line and which is coupled to the pivoting and locking device 82 fixed to the pontoon 19. In the exemplary embodiment, two suspension columns 35 are shown. The stationary part of a motor-generator 24 is immovably attached to each suspension column 35, the rotatable portion of which is connected to the lower drive shaft 2" of the lower rotor 3". The lower drive shaft 2" and the lower blades 31", or their axes, respectively, are parallel to the pontoon water line 19. The lower blades 31 are adapted for contact with an aqueous medium.

### Activity

When operating, non-positive-displacement fluid machines according to the invention perform two basic movements. The first basic movement is that the carrier 4 rotates with the drive shaft 2 around the axis 21 of the drive shaft 2 which passes through the central part *41* of the carrier 4 (Fig. 1). In the central part 41, the rotary bond of the drive shaft 2 and the central wheel 6 created in the embodiment of Fig. 1 is implemented by the rotatable placement of the central wheel 6 on the drive shaft 2. A second basic movement occurs at the outer end 42 of each of the arms 43 where a pin 52 firmly connected to the blade 31 rotates in the satellite bearing 53. Each pin 52 is firmly attached to the satellite 5.

Kinematic coupling 7, which is constant for most of the machines described, in a reduction ratio of 2:1, provides positioning of the blades 31 depending on the position of the carrier 4 (Fig. 2) so that during turning of the carrier 4, for example, in the anti-clockwise direction c, the satellite turns in the opposite direction b. The gear ratio of 2:1 slowing achieves the effect, that in the course of one revolution of the arm 43 of the carrier 4 by 360° the blade 31 on this arm 43 turns by 180°. This is significant because during the turning of the arms 43 by 180° into the intermediate-position, the blade 31 makes a partial turn in relation to the direction of the arm 43 by 90°. This configuration is important for achieving the high efficiency of a non-positive-displacement fluid machine according to the invention. If the blade 31 in the initial position, given by the zero angle of standard measure in the counter-clockwise direction, is turned perpendicular with its entire surface in the direction of the impact force S, then in the intermediate position of partial rotation of the arm 43 by 180°, it is turned facing the impact force S only with its edge, whereas the resulting torque transferred to the drive shaft 2 decreases only by very little. If the carrier 4 has two opposing arms 43, in the initial position, the impact force S is therefore transferred to one blade 31, in full force, while being transferred in a small negative size to the other blade 31, in accordance with Fig. 2. In the position between the initial position and the intermediate position, but also during the movement of the carrier 4 from the intermediate position to the initial position, partial, predominantly positive torques are transmitted from the positioned blades 31 to the carrier 4. Under the condition of constant kinematic coupling 7 in a slowing ratio of 2:1, the stated torques with a certain margin of error are dependent only on the cosine of the angle of positioning of the blades 31. The sum of the partial torques from both blades 31 results in the resulting torque, which can be represented as the resultant V acting on the arm 43 of the carrier 4.

This consideration of the calculation of torques applies to ideal conditions in which the blade has an infinitesimal thickness and a flat, completely smooth surface, whereas the coefficient of resistance of the medium acting perpendicularly on the surface is equal to one and, action on the infinitely thin edge, is equal to zero. For real conditions, however, the calculation is considerably more complicated and the favorable breakdown of the force S into the torque of the drive shaft can be affected by up to several percent by fine adjustment of the blade rotation 31 during the rotation of the arms 43. This is mainly because during their movement in the direction of the flow of the medium, the blades 31, are mainly exposed by their surface, whereas while moving upstream in the medium they are predominantly exposed on their edges, which does not have a zero-resistance coefficient, but a quite definite one, roughly within the range of 0.2 to 0.3. The said fine correction of the rotation of the blades 31 can be performed either purely mechanically, e.g., as already shown in Figs. 3, and 4, or by means of a torque sensor 73 connected to one of the communication elements, e.g., a controlling computer or a communication protocol with the Internet of Things, IoT.

In the case of air turbines in particular, but also during other applications, when regulating output, it is necessary to react to the varying direction of the impact force S and set the position the blades 31 in the desired position. For this purpose, the central wheel 6 is released from its stationary position and rotated by the required adjustment angle. This also turns the satellites 5. After turning, the central wheel 6 is again immobilized. In many cases, it is sufficient if all the satellites 5 and thereby also the blades 31 are set identically. In this case, using the setting apparatus 8, the adjusting shaft 61, which is firmly attached to the central wheel 6, is rotated. The setting apparatus 8 may take the form of a simple, manually-controlled mechanism, but it is more advantageous if the setting apparatus 8 is actuated by the servomechanism 81. It is advantageous to control the servomechanism 81 using a control computer, especially in cases where return positioning of the central wheel 6 takes place, and in cases where the setting the central wheel 6 is subordinated to the outer variable elements, as outlined in the previous paragraph.

With some turbines, it is desirable that output is adjusted by individual adjustment of the position of the individual blades 31, which is performed (Fig. 7, 8) by individual servomechanisms 81, which are used to their assigned adjusting shafts 61, and thereby the individual central wheels 6, whose setting movement is transferred to the satellites 5.

For a turbine with a boom 12 (Figs. 3, 4), the entire rotor 3 can be advantageously turned in the direction of the wind by turning the setting mechanism 8 controlled with a servomechanism 81 (not shown). This modification is also suitable for the drive mechanism of a boat, as will be further described below.

If a turbine, or machine, respectively, is fitted with a carrier 4 with a variable length of its arms 43 and an eccentrically placed central wheel 6 on the drive shaft 2 (Fig. 3, 4), the gear ratio of the kinematic coupling 7 changes during a single revolution of the rotor 3. The result of this is that during this revolution the ongoing positioning of the blades 31 also changes. This modification of the rotor 3 is suitable for fluids with specific viscosity properties. The non-slip nature of the kinematic coupling 7 is ensured by the actions of springs 44.

For air turbines with a horizontal drive shaft 2 designed according to Fig. 5, where the turbine is fitted with two rotors 3 and the central wheel 6 of each of the rotors 3 is immovably attached to the base 1, the positioning of the blades 31 in relation to the impact force S of the wind is performed by turning the post 84 using the turning and locking device 82.

For air turbines with a vertical drive shaft 2, where a more precise setting of the blades 31 is required, and thereby regulation of the turbine output, than just by turning the central wheel 6, it is possible to apply the solution shown in Fig. 6, where two, or potentially three independent systems are used. The first system has already been described and uses either turning of a joint central wheel 6 by a single setting mechanism 8, shown on Fig. 1, or by turning each of the individual central wheels 6 with an independent setting mechanism - see Fig. 7. In the second system (Fig. 6) the upper part of the post 87 is tilted in the direction n, whereas the tilting and locking in the set position is ensured by the tilting mechanism 86. The third system allows turning the lower part 88 around a perpendicular axis passing through the foot bearing 83 (see also Fig. 6).

In the functioning of the individual non-positive-displacement fluid machines described up to this point, we were discussing turbines, primarily air turbines. Another group of machines falls into the category of boat drive mechanisms. If with air or water energy turbines, the impact force S acts on the blades 31, and creates torque on the rotor 3, which is then transferred via the drive shaft 2 to the generator 23, or potentially to the battery 28, whereas a component of the torque is the power resultant V given by the strength of the impact force S and the geometric position of the blades 31, then with boat drive mechanisms, the energy from the motor 25, or potentially the motor-generator 24, is transferred to the rotor 3. The resultant force V is created on its blades 31, which when acting on a fluid, respectively, water environment, is the cause of the movement of the vessel, on which the boat drive mechanism is installed. This is the case in Fig. 16 and Fig. 17, where the entire rotor 3 is submerged beneath the surface H. The blades 31 are adjusted so that their lower dead centers pass front wise perpendicular to the direction of travel, respectively, perpendicular to the direction of the impact force S of the streaming water. In contrast, on their upper dead centers the blades 31 are turned so as to present minimum resistance to the water flow. The boat drive mechanism from Figs. 16 and 17 has a rotor 3, which is actually a waterwheel, fitted with three blades 31. In accordance with Fig. 20, it is possible to use, for example, even four blades 31, or even another number.

Even for boat drive mechanisms, it is sometimes desirable to position the blades 31 in relation to the impact force S being overcome. This is enabled by the modification shown in Fig. 18, where the setting mechanism 8 can be used to turn the central wheel 6 and, in connection with it, the blades 31.

In the case of boat drive mechanisms for shallow waters (Fig. 19) it is necessary to react to the proximity of the bottom by turning the rotor 3 upward. This is accomplished with a turning and locking mechanism 82, which is used to raise the boom 12 to the required level. The setting mechanism 8 can be used to turn the blades 31 of the rotor 3 according to immediate need, similarly as with other non-positive-displacement fluid machines.

For a boat drive mechanism using the wind (Fig. 23) the action of each of the two rotors 3', 3" is the same as in most of the preceding cases. For optimum use of wind energy, both the upper blades 31' and the lower blades 31" can be rotated independently of each other. In the case of windless conditions, the motor-generator 24 is used for temporary drive, whereas in the case of favorable wind it is possible to store the excess energy of the rotating drive shaft 2 in the battery (not shown).

Use of a non-positive-displacement fluid machine in the form of a sailboat (Fig. 22) is based on the effect of the impact force S of the wind on the blades 31 in the form of sails 33, by which a power resultant V is achieved, the effect of which is energy production using a motor-generator 24. The energy produced is used for propulsion of the boat by another, not pictured, driving non-positive-displacement fluid machine, such as a wheel, or when the boat is at anchor, the energy is stored in the battery. This method of use in the form of a sailboat may alternatively be implemented without the propulsion force of the aforementioned, non-positive-displacement fluid machine. In this case, rotating carriers 4 are used, and on these, sails 33 are connected, powered by battery energy collected during occasional anchoring, or while sailing in the direction of a strong wind, when there is a surplus of energy. To implement this design, a single rotor 3 with sails 33 would be sufficient, but the mast 34 would have to be either reinforced or made of a very solid material. When joining the three rotors 3, much weaker masts 34 are sufficient without the need for reinforcement.

An amphibious transportation vehicle (Fig. 24, 25) has all the indications of acting like other non-positive-displacement fluid machines. The adjustment of its blades 31, however, is especially important, since, during travel on land or moving from land to the surface of water, these must come into contact with the terrain 91, making contact with the surface like the tires of ground vehicle, that is, with their flattened sides. For navigation in water, depending on local conditions, it is desirable to turn the blades 31 and lock them in a configuration necessary for creating the required impact force S. Just as in other cases, even here the turning and locking of the blades 31 is accomplished by the setting mechanism 8.

For a tethered balloon, according to Figs. 26 and 27, during the turning of the carrier 4 pursuant to the arrow c puts into motion the rotary part 65, namely, the generator 23 anchor. By this, electric power is induced in the stationary part 63, which is conducted, using a binding flexible energy conducting instrument 97, to the ground-based consumption point (not shown). Setting of the rotor 3 is achieved by the effect of the impact force S for one, by turning the bridging connector 96 in a foot bearing 83 and secondly, by the angle of the binding flexible energy conducting instrument 97.

For a free-flying balloon (Fig. 28, 29), a motor-generator 24 serves as a source of kinetic energy. Rising and descending is controlled by the angle of the blades 31 using the setting mechanism 8. Rising and descending can also be controlled using further unspecified devices that change the temperature of the gaseous filling of the blades 31. When halting flight and anchoring the balloon in relation to the ground surface, the rotation of the wind-driven blades 31 and their associated motor-generator 24 is used to produce and store energy, either in the form of electricity or tied to compressed air. The principle of controlled flight is manifest here, namely in the possibility of independent changes of the speed of rotation of the left and right carriers 4, using two mutually independent motor-generators 24, or motors, including their reverse rotation. The possibility of mutually independent positioning of the blades 31 of the satellites 5 using independent setting mechanisms 8 on the left and right carrier 4, also contributes to the maneuverability. The two stated options of maneuverability are mutually redundant, which provides a back-up system of control for the balloon.

The flying machine from Fig. 31 works based on the same principles as other non-positive-displacement fluid machines with the feature that by positioning the blades 31 such direction of an impact force S (not shown) is achieved, that its perpendicular element keeps the machine in the air and its horizontal element drives it in the direction of the arrow m, including rising, falling, backing up, diving and turning in place. The stated control of the machine is achieved by the fact that the individual setting mechanisms 8 and individual motor-generators 24 are controlled mutually independently. In limited intensity, this flying machine fulfills all of the stated flight characteristics even in an emergency regime or in the event of failure of one of the motor-generators 24. In the event of shut off of all motors, for example, due to loss of power or fuel, the separate braking of the individual blades by independent setting mechanisms 8 is used, whereby a spatially-controlled parachute descent to the ground is achieved. This parachute effect is marked because the blades 31 have a large surface area and are slow-moving. Relatively large surfaces on slow-moving blades 31 have the same advantage during take-off of a machine and during its perpendicular landing.

With the drones shown in Figs. 32, 33 the power resultant V of the motorized rotors 3 is vectored into a force, whose reaction creates an impact force S, the effect of which is a drone in sustained flight.

A machine in the form of transport or rescue platform as per Fig. 30 has, through the effect of positioning blades 31, the ability both for flight and stopping in place in mid-air. The blades 31, meanwhile, only take up space over the bridging connector 96. This means that if the bridging connectors 96 are to function as a bridge deck, it is possible to align several identical machines next to each other, and thus create a connected, temporary pathway necessary for rescue or construction work in places where access would be otherwise difficult or impossible.

A non-positive-displacement fluid machine of the water turbine type (Fig. 34, 35) is set in motion by the impact force S of water flowing in a trough 99. The flowing water is slowed by the blades 31 during the transfer of energy, whereas an empty space arises between the blades 31, which creates suitable conditions for the migration of fish in both directions. This is, therefore, a solution that is suitable for taking advantage of water flowing over a weir in a river.

A non-positive-displacement fluid machine in the form of a water turbine for taking advantage of the energy of coastal sea waves and free-flowing water in a river (Figs. 36, 37) has blades 31 tall enough to make use of the impact force S, or energy, respectively, of both low and high water surface H levels. Its implementation is therefore possible both in the case of a river with small fluctuations in its surface H level, as well as in the case of shallow breakers, where high and low tides are manifested only to a small degree.

In the alternative of the surface level turbine according to Figs. 38 and 39, the energy of the air medium is used to drive the upper generator 23', while the energy of the water medium is used to drive the lower generator 23". The outputs of each of the generators 23', 23" are independently controlled by separate, independent of each other, adjusting mechanisms 8', 8". In order for the lower rotor 3" to react to the varying level of the surface H level, the lower blades 31" are preferably hollow, waterproof and air-filled, and their vertical movement holds them in a constant floating position. The lowest floating position is defined by a stop 68. The energy input of all the turbines to the bottom is resolved with a cable passing through the inside of a hollow column 18.

A floating turbine according to Fig. 40 uses an air medium acting on the upper rotor 3', or, if anchored, also the energy of a flowing aqueous medium transmitted to the lower rotors 3" 'and from them to the motor-generators 24. However, the motor-generators 24 also serve as a power source for the movement of the pontoon 19 along the water level H. By controlling the motor, i.e. by setting the lower blades 3", the pontoon 19 can be immobilized in the moving water. The rate of rise of the pontoon 19 above the *H* level is controlled by the amount of water let in to the lower blades 31"

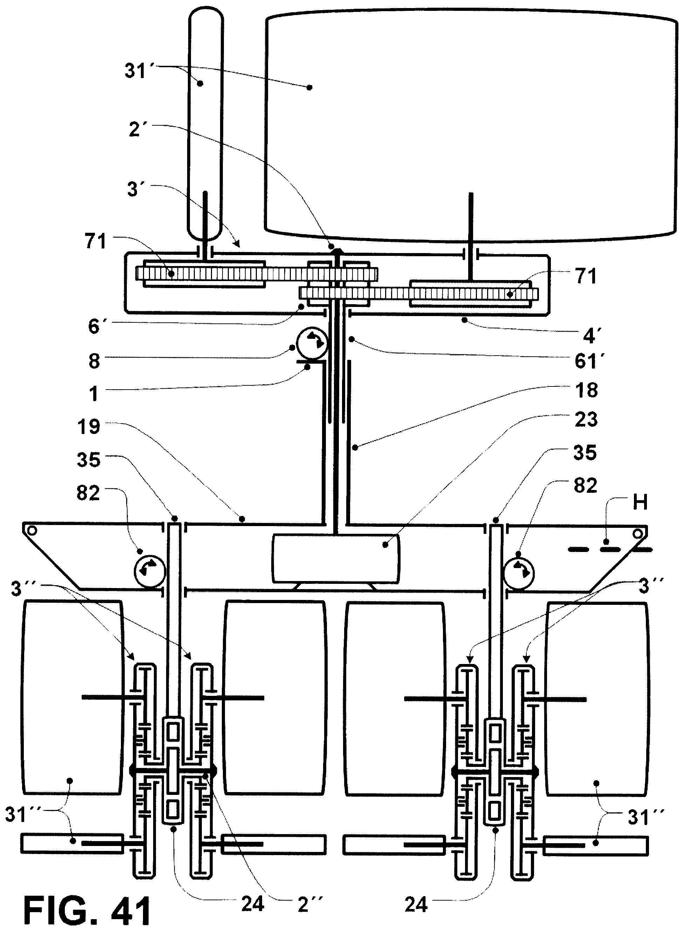

Even with a floating turbine according to Fig. 41, its submersion can be controlled by the amount of water content in the lower blades 3" to the extent that, in conjunction with the lower blades 3", the bottom of the pontoon 19 can be elevated to the surface H level. As with the pontoon 19 raised above the surface H level, so also with the pontoon 19 partially submerged, the lower blades 31" can be driven in the selected direction. The elevated pontoon, meanwhile, makes the cruise significantly less resistive.

### Industrial Applicability

A non-positive-displacement fluid machine according to the invention has applications in power generation, in the production of electricity, compressed air and in the field of transport, in particular water, amphibious, air and also in mobile agricultural and construction machinery.

**List of Terms**

| | |
|---|---|
| **1 base** | **3 rotor** |
| 11 anchor bearing | 3' upper rotor |
| 12 boom | 3" lower rotor |
| 14 side piece | 31 blade |
| 15 radial bearing | 31' upper blade |
| 16 positioning axis | 31" lower blade |
| 17 base | 32 frame |
| 18 hollow column | 33 sail |
| 19 pontoon | 34 pole |
| | 35 hanging post |
| **2 Drive shaft** | |
| 2' upper Drive shaft | **4 carrier** |
| 2" lower Drive shaft | 4' upper carrier |
| 21 axis 21 of drive shaft 2 | 4" lower carrier |
| 22 transmission gear | 41 central part |
| 23 generator | 42 outside end |
| 23' upper generator | 43 arm |
| 23" lower generator | 44 spring |
| 24 motor-generator | 45 housing |
| 25 motor | |
| 26 drive wheel | **5 satellite** |
| 27 cover | 5' upper satellite |
| 28 battery | 5" lower satellite |
| 29 parallel shaft | 51 axis 51 of the satellite 5 |
| | 52 pin |
| | 53 satellite bearing |
| 6 **central wheel** | 87 upper part |
| 6' upper central wheel | 88 lower part |
| 6" lower central wheel | 89 rotatable mounting |
| 61 adjusting shaft | |
| 61' upper adjusting shaft | **9 solid unmoving foundation** |
| 61" lower adjusting shaft | 91 terrain |
| 62 segment | 92 bottom |
| 63 stationary part 63 of generator 23 | 93 cockpit |
| 64 axis 64 of central wheel 6 | 94 boom |
| 65 rotary part 65 of generator 23 | 95 body |
| 66 transmission device/apparatus | 96 bridging connector |
| 67 toothed connector | 97 flexible energy-conducting binding means/device |
| 68 stop | |
| 69 weight | 98 gondola |
| | 99 trough |
| **7 constant kinematic coupling** | |
| 71 non-slip, endless element | S impact force |
| 72 inserted gear | V resultant |
| 73 torque sensor 73 | H water surface |
| | b direction b of rotation of the satellite 5 |
| **8 setting mechanism** | c direction c of carrier rotation 4 |
| 8' upper setting mechanism | r diameter |
| 8" lower setting mechanism | j distance |
| 81 servomechanism | t half thickness |
| 82 turning/positioning and locking | m direction m of movement of cockpit 93 |
| apparatus | n direction n of column tilt 84 |
| 83 foot bearing | p eccentricity |
| 84 fixed column | IoT Internet of Things |
| 85 joint | |
| 86 tilting mechanism | |

## Claims

1. A non-positive-displacement fluid machine contains, for one, a rotor (3) with blades (31) for the transfer of the impact force (S) of a fluid environment and then also contains a drive shaft (2), which is coupled with and/or adapted for coupling with an energy machine from the group of machines containing a motor (25), generator (23) or a motor-generator (24), **characterized in that that** the rotor (3) contains a rotating carrier (4) fitted with at least one arm (43), in the central part (41) of which a drive shaft (2) is attached perpendicular to the plane of movement of the carrier (4), and where a rotary attachment of the central wheel (6) with the drive shaft (2) is created around the axis (21) of the drive shaft (2), whereas on the outside end (42) of the arm (43) a satellite (5) is rotatingly set with the coaxially attached blade (31), and which satellite (5) is coupled with the central wheel (6) by kinematic coupling (7) with the reduced rotations of the satellite (5) in the opposite direction (b), than the direction (c) of the turning of the carrier (4), and simultaneously the central wheel (6) is set in one of three movement configurations in relation to the base (1) of which the first configuration is fixed, the second configuration is adapted for positioning and subsequent locking in position, and in the third configuration adapted for controlling turning in both directions, whereas the base (1) is modified to allow embedding of the drive shaft (2).

2. The non-positive-displacement fluid machine, according to claim 1, is **characterized in that** the carrier (4) contains at least two arms (43), whereas a rotary satellite (5) with its assigned blade is set on the outer ends (42) of each of the arms (43) and the kinematic coupling (7) has a constant transfer reduction ratio of 2:1.

3. The non-positive-displacement fluid machine, according to claim 2, is **characterized in that** the rotating connection of the central wheel (6) with the drive shaft (2) contains an adjusting shaft (61), which is, for one, centrally, rotatingly placed in relation to the drive shaft (2) and secondly, immovably connected with the central wheel (6).

4. The non-positive-displacement fluid machine, according to claim 3, is **characterized in that** the adjusting shaft (61) is coupled with the setting mechanism (8) adapted for rotation and locking of the central wheel (6).

5. The non-positive-displacement fluid machine, according to claim 4, is **characterized in that** the setting mechanism (8) contains a servomechanism (81), that is mounted on the base (1) and which is adapted for positioning the adjusting shaft (61) and locking it in relation to base (1).

6. The non-positive-displacement fluid machine, according to claim 3, is **characterized by having** the adjusting shaft (61) coupled with the setting mechanism (8) adapted for controlled, bidirectional turning of the central wheel (6), whereas on at least one element from the group including the arm (43) of carriers (4) and drive shaft (2) is torque sensor (73) has been modified a sensor (73) of torque, whereas this sensor (73) is coupled with the setting mechanism (8) by means of one of the communication elements in the group that includes, for one, a control computer and second, a communication protocol with the Internet of Things, IoT.

7. The non-positive-displacement fluid machine, according to one of claims 3 or 6, is **characterized in that** the central wheel (6) divided into coaxial, identical segments (62), of which each segment (62) is immovably attached to its adjusting shaft (61) and setting mechanism (8), and contains individual servomechanisms (81) adapted for independent turning of their respective adjusting shafts (61), whereas the servomechanisms (81) are adapted in one case for locking of the adjusting shafts (61) and in the other case for bidirectional turning of the adjusting shafts (61) in relation to the base (1).

8. The non-positive-displacement fluid machine, according to claim 1, is **characterized in that** the drive shaft (2) is eccentrically, rotatable set in the central wheel (6), whose pitch diameter is half that of the pitch diameter of the satellite (5), whereas the central wheel (6) is attached to one end of the boom (12), whose other end is rotatingly mounted on an advantageously hollow column (18) firmly anchored to the base (1) and parallel with the drive shaft (2), whereas a setting mechanism (8), is mounted on the base (1), which is adapted for turning the boom (12) and locking its position in relation to the base (1), whereas, further, the outside end (42) of the arm (43) of the carrier (4) is sliding inserted in a radial direction in relation to the central part (41) and the outside end (42) of the arm (43) is connected to the central part (41) with a spring (44) with force effects for non-slipping engagement of the constant kinematic coupling (7).

9. The non-positive-displacement fluid machine, according to claim 1, is **characterized in that** constant kinematic coupling (7) is created by a non-slip endless element (71), which loops around the element pair created by the central (6) and satellite (5).

10. The non-positive-displacement fluid machine, according to claim 2, is **characterized in that** constant kinematic coupling (7) is created by a non-slip endless element (71), which loops around the central wheel (6) and at least two satellites (5).

11. The non-positive-displacement fluid machine according to one of claim 9 or 10, is **characterized in that** the non-slip endless element (71) is a toothed belt.

12. The non-positive-displacement fluid machine, according to claim 1, is **characterized in that** the constant kinematic coupling (7) contains an odd number of inserted gears (72), through which the central wheel (6) is interconnected with the satellite (5), whereas the inserted gears (72), central wheel (6) and the satellite (5) are provided with teeth.

13. The non-positive-displacement fluid machine according to claim 12, is **characterized in that** the inserted wheel (72), central wheel (6) and the satellite (5) are fitted with spur gearing.

14. The non-positive-displacement fluid machine, according to claim 12, is **characterized in that** the inserted gear (72), central wheel (6) and satellite (5) are provided with bevel gearing, whereas the axis (51) of the satellite (5) is parallel with the axis (21) of the drive shaft (2).

15. The non-positive-displacement fluid machine, according to claim 12, is **characterized in that** the embedded wheel (72), central wheel (6) and the satellite (5) are provided with bevel gearing, whereas the carrier (4) has at least two arms (43) and the axes (51) of the satellites (5) are mutually skewed, even in relation to the axis (21) of the drive shaft (2).

16. The non-positive-displacement fluid machine, according to claim 1, is **characterized in that** the drive shaft (2) is rotatingly attached to the central wheel (6), which is attached to the base (1), on which the generator (23) is set, coupled with the drive shaft (2), whereas the base (1) is attached to a fixed post (84), which is perpendicular to the drive shaft (2), whereas the base (1) is attached to a fixed post (84), which is perpendicular to the drive shaft (2) and rotateable set in the foot bearing (83), which is anchored into a solid foundation (9), whereas the fixed post (84) is provided with a turning and locking mechanism (82).

17. The non-positive-displacement fluid machine, according to one of the claims 4 and 7, is **characterized in hat** the drive shaft (2) is coupled with the generator (23), which is set on the base (1), which is attached to the top part (87) of a pole, whose lower section (88) is placed on a solid, unmoving foundation (9) and connected with the upper part (87) via a joint (85), whereas a tilting mechanism (86) is installed between the upper part (87) and the lower part (88) of the pole.

18. The non-positive-displacement fluid machine, according to claim 2, is **characterized in that** the drive shaft (2) has, essentially, a horizontal position and is centrally, rotatingly set in the adjusting shaft (61), which, together with the central wheel (6) is fastened to the lower end of the side piece (14), whose upper end is tiltingly connected with the base (1), which is set in the hull (95) of the boat, whereas a motor (25), which is coupled with the drive shaft (2) via the transmission apparatus (22), is attached to the upper end of the side piece (14).

19. The non-positive-displacement fluid machine, according to claim 4, is **characterized in that** the drive shaft (2) has, essentially, a horizontal position, whereas it is rotatingly embedded in the base (1), which is installed in the hull (95) of the boat and on which the motor (25), which is coupled with the drive shaft (2), is set, and the adjusting shaft (61) is rotatingly embedded on the drive shaft (2) and on it, also rotatingly, the carrier (4).

20. The non-positive-displacement fluid machine, according to claim 4, is **characterized in that** the drive shaft (2) is rotatingly set in the adjusting shaft (61), which is rotatingly set in the boom (12), whereas the boom (12) is embedded, using rotating placement (89), in the base (1), which is installed in the hull (95) of the boat and where the motor (25) is located, which is coupled with the drive shaft (2), while at the same time, a setting apparatus (8), which is coupled with an adjusting shaft (61) and the boom (12) is coupled with the turning and locking mechanism (82), which is adapted for turning of the boom (12) in a rotating bearing (89).

21. The non-positive-displacement fluid machine, according to claim 20, is **characterized in that** a transmission apparatus (66) is arrayed in the boom (12) between the drive shaft (2) and a parallel shaft (29), which is, for one, coaxial with the rotary placement (89) and secondly, coupled with a motor (25).

22. The non-positive-displacement fluid machine, according to claim 4, is **characterized in that** the drive shaft (2) is rotatingly mounted in a vertical position on the base (1), which is embedded in the hull (95) of the boat, whereas the upper adjusting shaft (61'), with the upper adjusting mechanism (8') is rotatingly mounted on the upper end of the drive shaft (2) and on the lower end of the drive shaft (2) is mounted the lower adjusting shaft (61") with the lower adjusting mechanism (8") and the drive shaft (2) is coupled with a motor-generator (24) and is firmly connected at the upper end to the upper rotor (3') adapted for transmission of impact force (S) from streaming air and at the lower end with the lower rotor (3") adapted for transmission of impact force (S) to the water.

23. The non-positive-displacement fluid machine, according to claim 4, is **characterized in that** it has at least one rotor (3), whose adjusting shaft (61) is set in a foot bearing (83) attached to a base (1) integrated into the hull (95) of a boat, and a drive shaft (2) is coupled by the transmission apparatus (22) with a motor-generator (24) and each pin (52) of the satellite (5) is connected with the lower part of the sail (33) as blades (31), whereas the upper parts of the sails (34), in the case of multiple rotors 3, are anchored into a common joint (85).

24. The non-positive-displacement fluid machine, according to claim 4, is **characterized in that** an essentially horizontal drive shaft (2) that is coupled with a motor-generator (24), which is placed on the base (1) built into the body (95) of an amphibious vehicle, with blades (31) adapted traction on terrain (91), whereas the sum of the size of the diameter (r) of the carrier (4) and a one-half the thickness (t) of the blades (31) is greater than the distance (j) of the axis (21) of the drive shaft (2) from the bottom of the (92) body (95).

25. The non-positive-displacement fluid machine, according to claim 3, is **characterized in that** the carrier (4) has at least two arms (43) and the adjusting shaft (61) is centrally rotatingly set in the drive shaft (2) and a base (1) is connected to the adjusting shaft (61), to which the stationary part (63) of the generator (23) is attached, and the rotating part (65) of the generator (23) is connected to the drive shaft (2), whereas the generator (23) connected beneath the base (1) by a flexible, binding, energy conducting means (97) with a bridging connector (96), which is rotatingly set in a foot bearing (83) firmly anchored in a solid, unmoving foundation (9).

26. The non-positive-displacement fluid machine, according to claim 3, is **characterized in that** the carrier (4) has at least two arms (43) and the adjusting shaft (61) is centrally, rotatingly embedded in the drive shaft (2), with which the drive wheel (26), is also firmly connected, and which is coupled with a generator by the transmission apparatus (22) using a belt (23), whereas the transmission mechanism belt (22) has a sliding weight (69) resting against it, which is attached to the adjusting shaft (61) and the generator (23) is rotatingly embedded perpendicular to its axis in the foot bearing (83), which is fixedly anchored into a solid, unmoving foundation (9).

27. The non-positive-displacement fluid machine, according to claim 4, is **characterized in that** it has two carriers (4), one of which is placed on the left side and the other on the right side in the direction of the traction movement of the machine and both carriers (4) are mutually interconnected with pass through pins (52), whereas each of the carriers (4) is, for one, provided with at least two arms (43), on the ends of which are satellites (5) with blades (31), and secondly, they are connected to an independent constant kinematic coupling (7) mechanism, and to the adjusting shaft (61), which, for one, is centrally, rotatingly embedded in the drive shaft (2) and then also, it has a side piece (14) suspended from it and connected with the base (1), whereas a motor generator (24) is mounted on the base (1), which is coupled with the drive shaft (2), by the transmission apparatus (22), whereas at the same time, the blades (31) have and lower unit weight than air and a gondola (98) is hung under the base (1).

28. The non-positive-displacement fluid machine, according to claim 4, is **characterized in that** the drive shaft (2) is coupled with a motor-generator (24), which is mounted on the base (1), whereas the drive shaft (2) is placed at the same level with a parallel drive shaft (2) of at least one other rotor (3) of the same design and the bases (1) of the rotors (3) are symmetrically distributed on the upper part of the cockpit (93) and the carriers (4) of the rotors (3) are placed along the side of the cockpit (93), whereas the drive shafts (2) are arrayed in a direction perpendicular to the direction (m) of motion of the cockpit (93).

29. The non-positive-displacement fluid machine, according to one of claims 2 and 4, is **characterized in that** an boom (94), is attached to the base (1) with a rotatingly embedded drive shaft (2) to which is attached a motor (25) coupled with the drive shaft (2), by the transmission apparatus (22) whereas under the boom (94) and cockpit (93), is suspended, which is provided with a second boom (94), which is symmetrically equipped with a second rotor (3).

30. The non-positive-displacement fluid machine, according to claim 29, is **characterized in that** the drive shafts (2) have a direction perpendicular to the direction (m) of movement of the cockpit (93), whereas at least one rotor (3) is arranged over the front part of the cockpit (93) and at least one rotor (3) over the rear part of the cockpit (93).

31. The non-positive-displacement fluid machine, according to claim 29, is **characterized in that** the drive shafts (2) have a direction parallel with the direction (m) of movement of the cockpit (93), whereas at least one of the pairs of parallel arrayed rotors (3) is located over the cockpit (93).

32. The non-positive-displacement fluid machine, according to claim 2, is **characterized in that** is has two opposed, mutually independent carriers (4), of which each on has at least two arms (43), on the ends of which satellites (5) with blades (31), are arrayed, and whereas each of the carriers (4) is connected to an independent, constant kinematic coupling (7) mechanism and the drive shaft (2) of each of the carriers (4) is rotatably embedded, for one, in the base (1) and then also in the central wheel (6), with which the setting apparatus (8), anchored to the base (1), is coupled, and beneath the base (1) a side piece is suspended (14), which is interconnected with the opposite side piece (14) by a bridging connector (96), whereas the motor (25), which is coupled with the drive shaft (2) by the transmission apparatus (22), is attached to the bridging connector (96) and/or to the side piece (14).

33. The non-positive-displacement fluid machine, according to claim 3, is **characterized in that** the adjusting shaft (61) is firmly connected to the trough (99), which is, for one, attached to the base (1) and otherwise also adapted for the flow of water, whereas the blades (31) are submerged in trough (99) and the drive shaft (2) is connected with a generator (23), which is attached to the base (1).

34. The non-positive-displacement fluid machine, according to claim 4, is **characterized in that** the base (1) is in the form of a hollow column (18), the upper part of which is enclosed by the carrier (4) with blades (31) directed towards the lower part of the hollow column (18), whereas the drive shaft (2) makes up the rotating part of the generator (23), which is firmly coupled with the carrier (4), while the stationary part of the generator (23) is firmly connected to the hollow column (18), on the upper end of which the adjusting shaft (61) is mounted in a rotatable way on its outside, opposite which, the setting mechanism (8), is attached to the hollow column (18), whereas the lower end of the hollow column (18) is adapted for embedding in the lakebed, riverbed, etc., while at the same time, the blades (31) are adapted for submersion beneath the water's surface (H) and the generator (23) is adapted for placement above the water's surface (H).

35. The non-positive-displacement fluid machine according, to one of the claims 4 and 6, is **characterized in that** the base (1) is in the form of a hollow column (18), which is adapted for embedding into the lakebed, riverbed, etc., and on the upper part of which is mounted the upper rotor (3') with the upper blades (31') adapted for contact with the air medium, and in the lower part, the lower rotor (3") with lower blades (31") adapted for contact with a water medium, whereas the upper rotor (3') contains the upper adjusting shaft (61'), which is mounted in a rotatable way on the hollow column (18), and coupled with the upper setting mechanism (8'), and the lower rotor (3") contains the lower adjusting shaft (6"), which is rotatably and simultaneously slidingly mounted on the hollow column (18) and is coupled with the lower setting mechanism (8"), whereas further the upper carrier (4') is firmly attached to the rotary part (65) of the upper generator (23') and the lower carrier (4") is firmly attached to the rotary part (65) of the lower generator (23") and further, the stationary part (63) of the upper generator (23) is firmly fixed to the hollow column (18), while the stationary part (63) of the lower generator (23") is mounted slidingly on the hollow column (18).

36. The non-positive-displacement fluid machine, according to one of the claims 4 and 6, is **characterized in that** the base (1) comprises a floating pontoon (19), on which at least one hollow column (18) is anchored, in the upper part of which the upper rotor (3') is mounted, fitted with the upper blades (31') adapted for contact with a gaseous medium and also the upper drive shaft (2') rotatably placed in the hollow column (18), whereas the upper drive shaft (2') is coupled with a generator (23) attached to the pontoon (19), under which at least one lower rotor (3") is suspended with its lower blades (31") adapted for contact with a water medium and with its axes oriented perpendicular to the waterline of the pontoon (19), whereas the lower drive shaft (2"), is also parallel with the axes of the lower blades (31"), which is coupled with a motor-generator (24) attached to the pontoon (19).

37. The non-positive-displacement fluid machine, according to claim 1, is **characterized in that** the base (1) comprises a floating pontoon (19), on which at least one hollow column (18) is anchored, in the upper part of which the upper rotor (3') is mounted, provided with the upper blades (31') adapted for contact with a gaseous medium and also the upper drive shaft (2') rotatably placed in the hollow column (18), whereas the upper drive shaft (2') is coupled with a generator (23) attached to the pontoon (19) and the upper central wheel (6') is coupled with the setting mechanism (8) anchored on the hollow column (18) and further, on the pontoon (19) there is at least one hanging column (35), mounted in a rotatable way, which is oriented beneath the waterline, and to which a turning and locking mechanism (82) is coupled, attached to the pontoon (19), whereas the stationary part of the motor-generator (24), whose rotary part is connected to the lower drive shaft (2") of the lower rotor (3") is firmly fixed to the hanging column (35) in such a way that the lower drive shaft (2") and the lower blades (31"), adapted for contact with a water medium, have axes parallel with the waterline of the pontoon (19).
